# EUROPÄISCHE PATENTSCHRIFT

(11) **EP 3 194 487 B1**
(45) Veröffentlichungstag und Bekanntmachung des Hinweises auf die Patenterteilung: **02.11.2022**
(21) Anmeldenummer: 15771536.8
(22) Anmeldetag: 16.09.2015
(51) Int. Cl.: C08K 5/3417

(54) **VERWENDUNG VON ORGANISCHEN OXYIMIDEN ALS RADIKALGENERATOREN IN KUNSTSTOFFEN, VERFAHREN ZUR ERZEUGUNG VON RADIKALEN IN KUNSTSTOFFEN SOWIE VERWENDUNG DES VERFAHRENS**
USE OF ORGANIC OXYIMIDES AS RADICAL GENERATORS IN PLASTICS, METHOD FOR GENERATING RADICALS IN PLASTICS AND USE OF SAID METHOD
UTILISATION D'OXYIMIDES ORGANIQUES EN TANT QUE GÉNÉRATEURS DE RADICAUX DANS DES PLASTIQUES, PROCÉDÉ DE PRODUCTION DE RADICAUX DANS DES PLASTIQUES ET UTILISATION DUDIT PROCÉDÉ

(30) Priorität: 18.09.2014 DE 102014218811
(43) Veröffentlichungstag der Anmeldung: 26.07.2017
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); MAZUROWSKI, Markus, 65462 Ginsheim-Gustav (DE)
(74) Vertreter: Pfenning, Meinig & Partner mbB
(86) Internationale Anmeldenummer: PCT/EP2015/071249
(87) Internationale Veröffentlichungsnummer: WO 2016/042038

(56) Entgegenhaltungen:
- WO-A1-2007/028731
- WO-A1-2015/180888
- US-A- 4 409 367

## Beschreibung

Die vorliegende Erfindung betrifft die Verwendung von organischen Oxyimiden als Radikalgeneratoren in Kunststoffen. Zudem betrifft die vorliegende Erfindung ein Verfahren zur Generierung von Radikalen in Kunststoffen, insbesondere für Abbau- und Vernetzungs- und Pfropfungsreaktionen von Kunststoffen bzw. Polymeren sowie eine Verwendung dieses Verfahrens.

Die kontrollierte Herstellung von verschiedenen Polymertypen, insbes. von Polyolefintypen (unterschiedliche Molekulargewichte, Schmelzviskositäten, Molekulargewichtsverteilungen, Dichte) kann einerseits bei der Synthese, aber auch in einem nachfolgenden Schritt, z.B. bei der Verarbeitung mittels Extrusion oder Spritzguss erfolgen. Eine etablierte Methode dabei ist der Zusatz von Radikalbildnern, die dementsprechend bei den Verarbeitungstemperaturen radikalische Reaktionen initiieren, die dann in Abhängigkeit von der Polymerstruktur zu einem Polymerabbau, d.h. einer Erniedrigung des Molekulargewichts, oder zu einem Polymeraufbau, d.h. zu einer Erhöhung des Molekulargewichts bis hin zu einer Verzweigung und Vernetzung ("cross-linking") führen.

Ein kommerziell wichtiges Verfahren ist der Abbau von Polypropylen (sog. "vis-breaking") zu einem Produkt mit niedrigerem Molekulargewicht und engerer Molekulargewichtsverteilung (sog. "controlled rheology PP" oder "CR-PP"). Die resultierenden Produkte werden z.B. für die Erzeugung von Polypropylen-Fasern ("meltblown" or "spun-bonded" Verfahren) eingesetzt oder für leichtfließende dünnwandige Spritzgussteile ("thin wall injection molding"). Übliche Radikalgeneratoren, die für dieses Verfahren eingesetzt werden, sind organische Peroxide (s. z.B. D. Munteanu in H. Zweifel, Plastics Additives Handbook, Munich 2001, S. 725-811). Organische Peroxide erfordern bei der Handhabung jedoch umfangreiche Sicherheitseinrichtungen, führen zu unerwünschten Nebenreaktionen und die Abbauprodukte aus den Peroxiden können die Polymereigenschaften, wie z.B. die Langzeitstabilität negativ beeinflussen. Eine Verbesserung stellt dabei die Verwendung von wässrigem Wasserstoffperoxid dar (WO 2012/000022), allerdings ist hier die Handhabung sicherheitstechnisch ebenso herausfordernd und kann nicht in den üblicherweise vorhandenen Verarbeitungsapparaturen erfolgen. Weitere bekannte Alternativen für Radikalgeneratoren in Polypropylen-Abbauprozessen sind Hydroxypiperidinester (WO 0190113), asymmetrische Azo-Verbindungen (WO 2006/106059) oder Iminoxytriazine (WO 2014/064064). Diese Verbindungen sind jedoch häufig synthetisch schwer zugänglich, so dass diese kommerziell unbedeutend sind.

Ein weiterer industriell bedeutender Prozess ist die Vernetzung von Polyethylen (z.B. LDPE, LLDPE, MDPE) mit Radikalbildnern. Diese Prozesse unter Zusatz von Peroxiden werden häufig bei der Herstellung von Rohren und von Kabeln verwendet. Außer dass es wiederum gilt, dass die erwähnten Sicherheitsaspekte zu berücksichtigen sind, führen hier unkontrollierte Nebenreaktionen zur unerwünschten Gelbildung und zu Verarbeitungsproblemen.

Ein weiterer industriell wichtiger Prozess ist das Pfropfen ("grafting") von Monomeren oder ungesättigten Oligomeren auf bestehende Polymerketten in Gegenwart von organischen Peroxiden. Diese Prozesse haben vor allem Bedeutung zur Herstellung von Maleinsäureanhydrid-gepfropften oder Acrylsäure-gepfropften Polyethylen oder Polypropylen, Polyolefin-Co- und Terpolymeren, sowie auch Maleinsäureanhydrid gepfropften Styrol-Butadien oder Styrol-Butadien-Styrol Blockcopolymeren und deren hydrierten Folgeprodukten. Auch hier können, bedingt durch die vergleichsweise niedrigen Zersetzungtemperaturen der Peroxide, unerwünschte Nebenreaktionen wie Abbau, Gelbildung, Verfärbung auftreten.

Aus der WO 2015/180888 A1 ist die Verwendung von Oxyimid-enthaltenden Copolymeren oder Polymeren als Flammschutzmittel für Kunststoffe, Stabilisatoren für Kunststoffe, Rheologiemodifikatoren für Kunststoffe sowie als Initiatoren für Polymerisations- und Pfropfprozesse und/oder Vernetzungs- oder Kopplungsmittel bekannt.

Die WO 2007/028731 A1 betrifft einen Polymerartikel mit beschleunigter Abbaubarkeit, die von Licht, Hitze und/oder Feuchtigkeit ausgelöst werden kann. Der Polymerartikel beinhaltet dabei einen spezifischen Abbaubeschleuniger.

Es besteht daher nach wie vor der Bedarf für Radikalgeneratoren mit einer verbesserten Kontrolle der damit initiierten radikalischen Prozesse, einer einstellbaren Initiierungstemperatur, einer hohen Prozesssicherheit und einer einfachen synthetischen Zugänglichkeit, die außerdem als Additive auf üblichen Verarbeitungsmaschinen wie Extrudern eingesetzt werden können.

Aufgabe der vorliegenden Erfindung ist es somit, weitere Radikalgeneratoren für Kunststoffe anzugeben, die die zuvor genannten Problematiken umgehen.

Diese Aufgabe wird bezüglich der Verwendung von organischen Oxyimiden als Radikalgeneratoren in Kunststoffen mit den Merkmalen des Patentanspruchs 1, bezüglich eines Verfahrens zur Generierung von Radikalen in Kunststoffen mit den Merkmalen des Patentanspruchs 12 sowie bezüglich der Verwendungszwecke dieses Verfahrens mit den Merkmalen des Patentanspruchs 13 gelöst. Die übrigen unabhängigen Patentansprüche stellen dabei vorteilhafte Weiterbildungen dar.

Die vorliegende Erfindung betrifft daher die Verwendung von organischen Oxyimiden, insbesondere auch phosphorfreien organischen Oxyimiden als Radikalgeneratoren in Kunststoffen. Es wurde erfindungsgemäß erkannt, dass die Verwendung von organischen Oxyimiden, enthaltend mindestens ein Strukturelement der nachfolgend abgebildeten Formel I 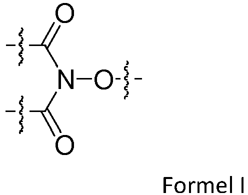 als Radikalgeneratoren in Kunststoffen geeignet ist.

Bei der erfindungsgemäßen Verwendung werden die organischen Oxyimide mit einem Kunststoff oder einer mindestens einen Kunststoff enthaltenden Formmasse vermischt und aktiviert, wobei die Aktivierung thermisch oder durch Bestrahlung erfolgt und während eines formgebenden Verfahrens des Kunststoffes oder der mindestens einen Kunststoff enthaltenden Formmasse erfolgt, wobei das formgebende Verfahren Spritzgießen oder Extrusion ist.

Die Formel I ist dabei so zu verstehen, dass das abgebildete Strukturelement in dem organischen Oxyimiden enthalten ist. Die erfindungsgemäß verwendeten Oxyimide sind dabei nicht gleichzusetzen mit Isocyanuraten bzw. hiervon abgeleiteten Verbindungen oder Verbindungsklassen.

Gemäß einer bevorzugten Ausführungsform der Erfindung werden insbesondere Oxyimide, enthaltend mindestens ein Strukturelement der nachfolgenden Formel II 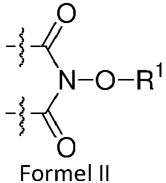 wobei R¹ für Wasserstoff oder einen gegebenenfalls substituierter Alkyl-, Cycloalkyl-, Aryl-, Heteroaryl- oder Acyl-Rest steht, als Radikalgeneratoren für Kunststoffe verwendet.

Alternativ oder in Kombination mit der zuvor genannten bevorzugten Variante können ebenso verbrückte Oxyimide, enthaltend mindestens ein Strukturelement der nachfolgenden Formel III 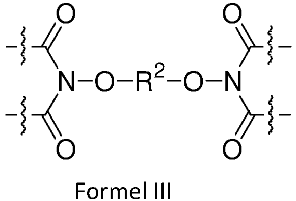 wobei R² für einen gegebenenfalls substituierten Alkylen-, Cycloalkylen-, Arylen-, Heteroarylen- oder verbrückenden Acyl-Rest steht, verwendet werden.

Das gemäß der vorliegenden Erfindung verwendete Oxyimid ist dabei ebenso bevorzugt halogenfrei, d.h. die entsprechende Verbindung beinhaltet keine Halogenatome.

Gemäß einer bevorzugten Variante ist R² ausgewählt aus Resten der Gruppe bestehend aus
-(CH₂)ₙ- mit n = 1 bis 18, -CH(CH₃)-, -C(CH₃)₂-, -O-, -S-, -SO₂-, -NHCO-, -CO-, -OC(O)O- sowie den nachfolgend abgebildeten Gruppen 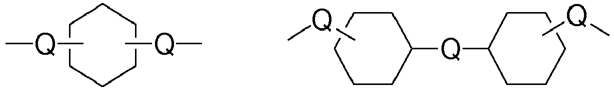 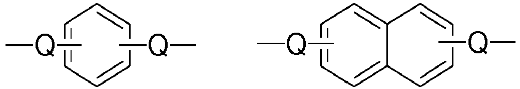 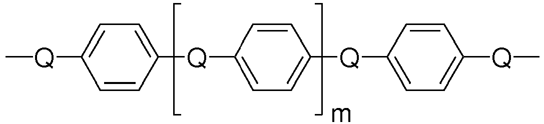 wobei
die in den zuvor abgebildeten Gruppen enthaltenen cycloaliphatischen oder aromatischen Ringsysteme unsubstituiert oder durch eine oder mehrere Alkyl- und/oder Alkoxygruppen substituiert sind,
- Q: bei jedem Auftreten gleich oder verschieden ist und ausgewählt ist aus der Gruppe bestehend aus einer chemischen Bindung sowie den Resten -(CH₂)ₙ- mit n = 1 bis 18, -CH(CH₃)-, -C(CH₃)₂-,-O-, -S-, -SO₂-, -NHCO-, -O-C(O)-O-, -CO-, und
- m: 0 oder 1 bis 18 ist.

Besonders bevorzugt sind die Reste R² dabei durch die nachfolgend abgebildeten Strukturelemente wiedergegeben, wobei Q die oben angegebene Bedeutung aufweist:

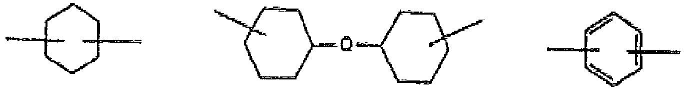

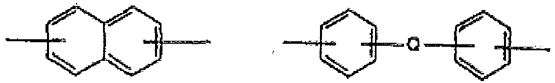

Insbesondere können die Reste R² dabei durch die nachfolgenden Strukturelemente gegeben sein:

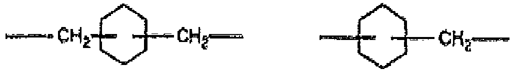

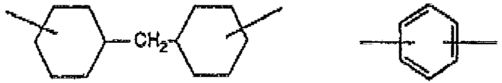

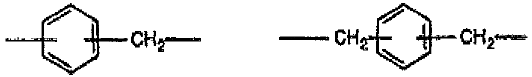

Gemäß einer besonders bevorzugten Ausführungsform bei dieser Variante der Erfindung weist das organische Oxyimid eine der nachfolgenden Strukturformel auf: 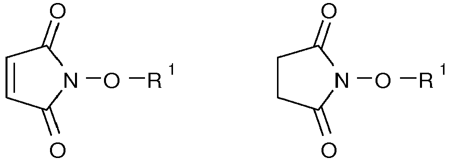 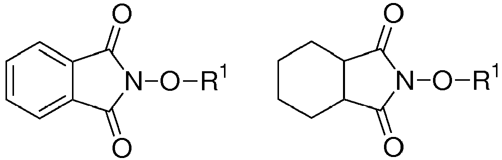 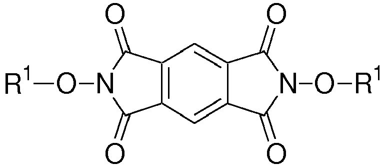 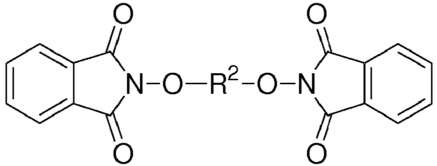 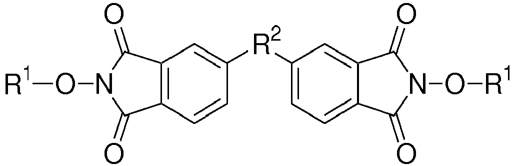 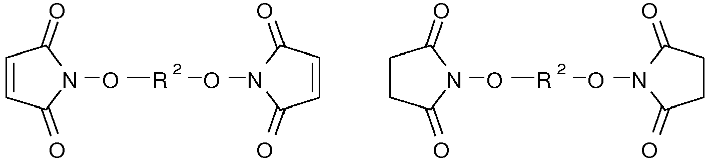 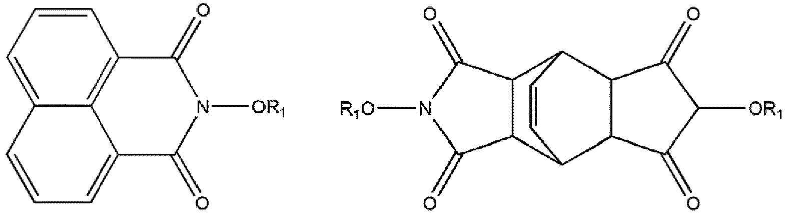 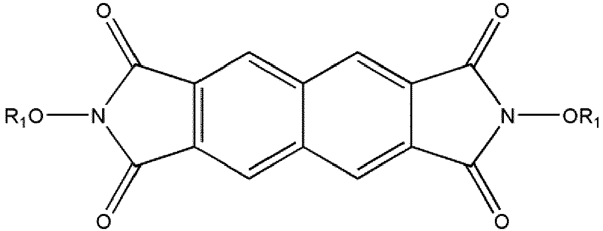 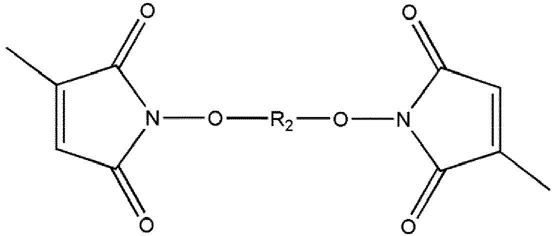 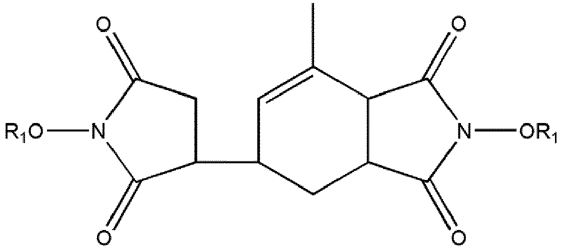 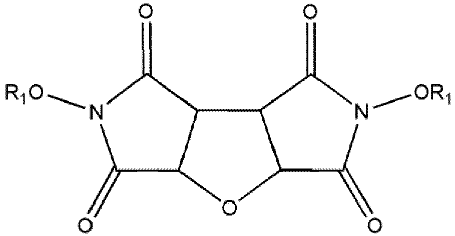 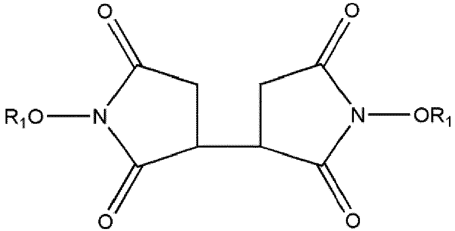 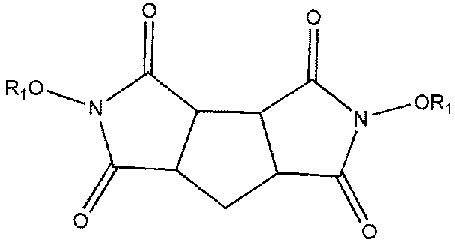 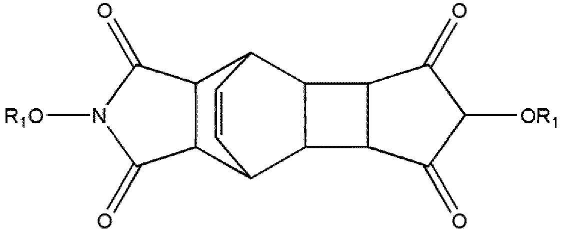 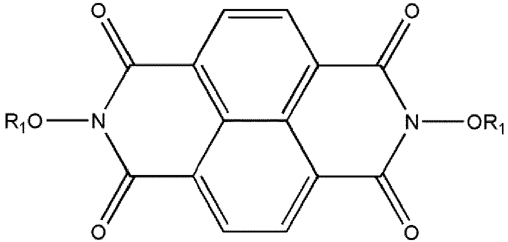 wobei jeweils R¹ und R² die oben angegebene Bedeutung aufweisen und R¹ und R₁ bzw. R² und R₂ gleichbedeutend sind.

Ein besonders bevorzugter Rest R¹ ist dabei Wasserstoff, ein Alkyl- oder ein Acylrest.

Als Radikalgeneratoren in Kunststoffen eignen sich insbesondere die nachfolgend abgebildeten Verbindungen 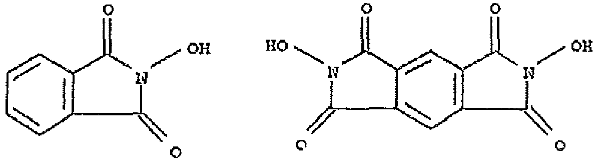 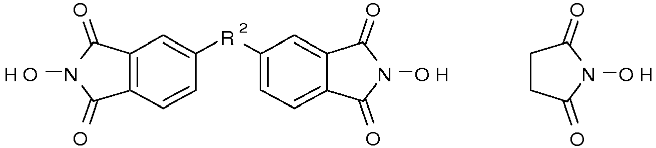 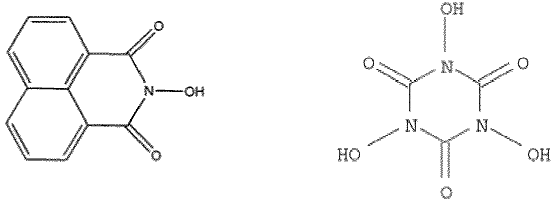 wobei R² die oben angegebene Bedeutung aufweist.

Die Auswahl des geeigneten Radikalgenerators erfolgt dabei so, dass die Bildung der Radikale bei den Verarbeitungstemperaturen der jeweiligen Polymeren in für die Reaktion und dem jeweiligen Verarbeitungsverfahren ausreichendem Umfang erfolgt. Die Temperaturen, bei der eine Radikalbildung erfolgt, können z.B. durch DSC ("Differential Scanning Calorimetry") bestimmt werden. Weitere Kriterien für eine Auswahl ist die Bildung vor Reaktionsprodukten, die z.B. flüchtig sein können und damit leicht aus dem Produkt zu entfernen sind oder hochmolekular sein können und damit im Produkt ohne Nachteile verbleiben. Die jeweiligen Verarbeitungsprozesse und Temperaturen für Kunststoff-Verarbeitungsprozesse sind dem Fachmann bekannt. Kunststoff-Verarbeitungsprozesse und dazugehörige Temperaturen können aber auch der Fachliteratur entnommen werden wie z.B. H. Domininghaus, P. Elsner, P. Eyerer. T. Hirth, Kunststoffe , 8. Auflage, Springer 2012. Insbesondere für Abbauverfahren kann der weitere Zusatz von Kettenüberträgern ("charge-transfer agents") vorteilhaft sein. Mögliche Kettenüberträger können aus der Klasse der Thiole, Disulfide, Phosphorsäureester, Phosphine, organische Halogenide wie lodide, Bromide, Chloride, Säureester, Aldehyde oder tertiäre Amine ausgewählt sein. Vorzugsweise weisen die Kettenüberträger einen Siedepunkt oberhalb der Verarbeitungstemperatur des jeweiligen Polymeren auf. Besonders bevorzugt sind Schwefelderivate wie Thiole und Disulfide. Geeignete Kettenüberträger sind beispielsweise:

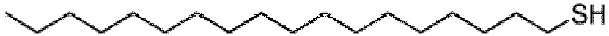

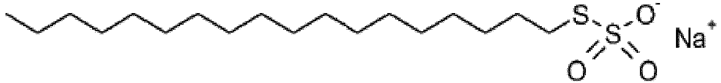

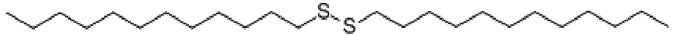

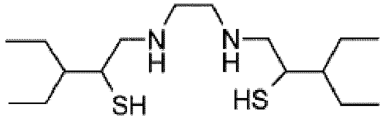

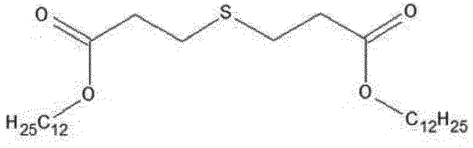

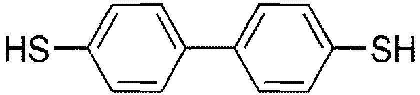

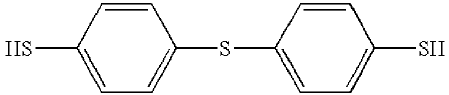

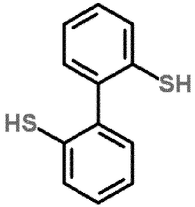

Insbesondere für Molekulargewichtsaufbaureaktionen und für Vernetzungsreaktionen kann der Zusatz von weiteren mehrfunktionellen Verbindungen zusätzlich zum Radikalgenerator und zum Polymeren vorteilhaft sein. Geeignete Verbindungen umfassen die Klassen von
a) Mehrfach ungesättigte Oligomere und Polymere auf der Basis von Polybutadien oder Poly-isopren
b) Di- und Poly-vinylverbindungen wie z.B. Divinyl-benzol
c) Di- und Poly-allylverbindungen, wie z.B. Polyallylether oder Polyallylester, Trisallylisocyanurat, Trisallylcyanurat, Diallyl-Bisphenol-A
d) Di- und Polymaleimide
e) Di- und Poly(meth)acrylester von Di- und Polyalkoholen, und/oder
f) Organofunktionelle Silane

Typische Beispiele für Organofunktionelle Silane sind:

Y-(CH₂)ₙ-SiX₃

mit n = 0 bis 3; Y = CH₂=CH-, CH₂=C(CH₃)COO-, NH₂-, SH-, Cl-;
X = -OR (R = Me, Et), -OCOCH₃

Typische Beispiele für Di- und Polymaleimide sind:

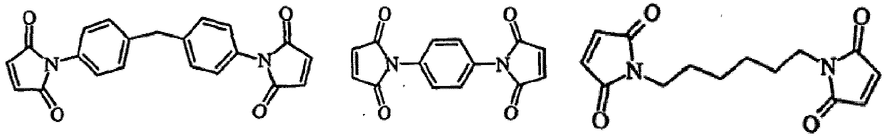

Typische Beispiele für Di- und Poly(meth)acrylester von Di- und Polyolen sind: 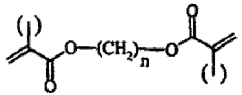 mit n = 2-5 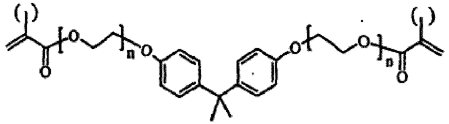 mit n= 1-5 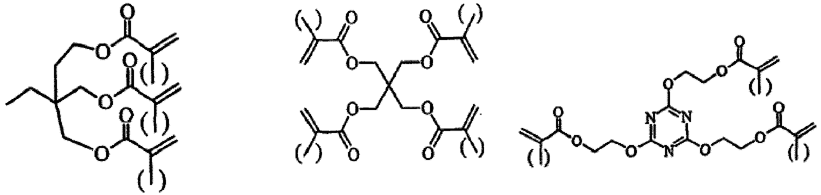 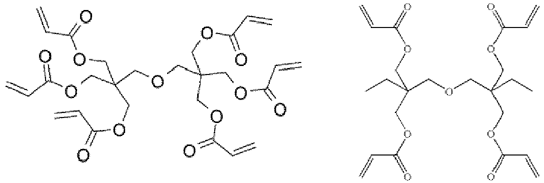 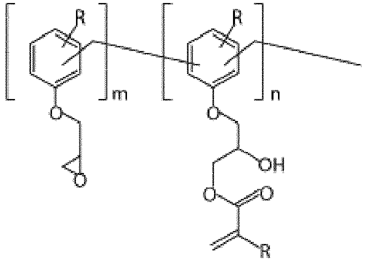 mit R= H oder Methyl und m=0-10, n=2-10

Ein typisches Beispiel für eine Allylverbindung ist:

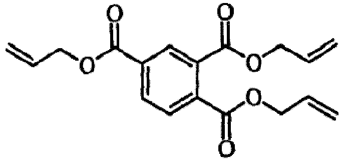

Pfropfungsreaktionen unter Initiierung der erfindungsgemäßen Radikalbildner werden in Gegenwart von ungesättigten Monomeren durchgeführt, die durch die Reaktion mittels einer chemischen Bindung auf dem Polymerrückgrat gebunden werden. Geeignete ungesättigte Monomere sind inbes. Maleinsäureanhydrid, Itaconsäureanhydrid, N-alkyl-maleimid, Acrylsäure, Methacrylsäure, Acrylsäureester, Methacrylsäureester, wie z.B. Lauryl(meth)acrylat, Stearyl(meth)acrylat, Glycidyl(meth)acrylat, Hydroxyethyl(meth)acrylat.

Weiterhin kann es vorteilhaft sein die Vernetzungs- oder Pfropfreaktion in Gegenwart eines zusätzlichen Nitroxylradikals durchzuführen. Durch Zusatz des Nitroxylradikals kann die Vernetzungs- oder Pfropfungsreaktion moderiert werden, d.h. der Reaktionsverlauf kann besser gesteuert werden, was zu weniger Nebenreaktionen des Prozesses führen kann. Geeignete Nitroxylradikale sind beispielweise:

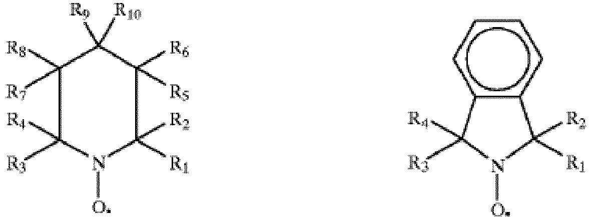

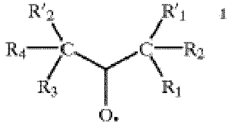

Wobei R1-R10 eine ggf substituierte Alkylgruppe, Phenyl, Hydroxyl, Alkoxy oder Estergruppe darstellen und z.B. unter den Bezeichnungen TEMPO, Hydroxy-TEMPO oder Oxo-TEMPO im Handel sind. Besonders bevorzugt sind die folgenden Nitroxylradikale:

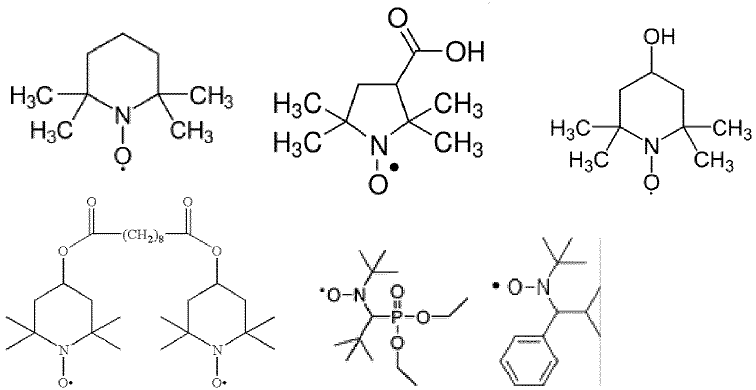

Weiterhin kann es vorteilhaft sein, dass die Abbau-, Vernetzungs- oder Pfropfreaktionen der erfindungsgemäßen Oxyimide unter der weiteren Zugabe von katalytisch wirkenden Verbindungen erfolgen. Solche Verbindungen können beispielsweise Metallsalze von Übergangsmetallen wie z.B. Kupfer, Mangan oder Eisen z.B. in Form der Acetate wie Cu(I)-acetat.

Weiterhin kann es vorteilhaft sein, dass die erfindungsgemäßen Radikalbildner mit mindestens einem weiteren Radikalbildner, z.B. verschiedenen Radikalbildnerklassen und/oder Radikalbildnern verschiedener Abbautemperaturen kombiniert werden. Die Temperaturen bei denen Radikale gebildet werden, werden so gewählt, dass diese Bildung bei den Verarbeitungstemperaturen der jeweiligen Polymeren erfolgt. Die Kombination von Radikalbildnern unterschiedlicher Abbautemperaturen ist vorteilhaft bei mehrstufigen Prozessen, so kann z.B. bei niedrigen Temperaturen eine Vorvernetzung und bei einer höheren Temperatur eine weitere Vernetzung von Polyethylen erfolgen.

Radikalbildner im Sinne der vorliegenden Erfindung sind Verbindungen, die durch thermische und Licht-induzierte Spaltung Radikale erzeugen können. Geeignete Radikalbildner für die hier vorliegenden Anwendungen sind solche, die für die Kunststoff- oder Beschichtungs-Verarbeitungsprozesse bei der ein Abbau, eine Vernetzung oder eine Pfropfung erfolgt eine für die Reaktion ausreichende Menge an Radikalen liefern.

Der weitere Radikalbildner ist dabei bevorzugt ausgewählt aus der Gruppe bestehend aus Peroxiden, N-Alkoxyaminen, -C-C- Radikalbildnern, Radikalbildnern mit Azogruppen (-N=N-), Radikalbildnern mit Hydrazingruppen (-NH-HN-), Radikalbildnern mit Hydrazongruppen (>C=N-NH-), Radikalbildnern mit Azingruppen (>C=N-N=C<), Radikalbildnern mit Triazengruppen (-N=N-N<) und Iminoxytriazinen.

Die Herstellung geeigneter Azoverbindungen ist beispielsweise in M. Aubert et. al. Macromol. Sci. Eng. 2007, 292, 707-714 oder in WO 2008101845, die Herstellung von Hydrazonen und Azinen in M. Aubert et al., Pol. Adv. Technol. 2011, 22, 1529-1538, die Herstellung von Triazenen in W. Pawelec et al., Pol. Degr. Stab. 2012, 97, 948-954 beschrieben. Die Synthese von Iminoxytriazinen ist in WO 2014/064064 beschrieben.

Peroxide sind handelsübliche Verbindungen, die z.B. von United Initiators bezogen werden können. Geeignete Peroxide sind beispielsweise:
2,5-Dimethyl-2,5-di(t-butylperoxy)hexan, 2,5-Dimethyl-2,5-di(t-butylperoxy)-hexin-3, 3,6,6,9,9-Pentamethyl-3-(ethylacetat)-1,2,4,5-tetraoxycyclononan, t-Butylhydroperoxid, Wasserstoffperoxid, Dicumylperoxid, t-Butylperoxyisopropylcarbonat, Di-t-butylperoxid, p-Chlorbenzoylperoxid, Dibenzoyldiperoxid, t-Butylcumylperoxid, t-Butylhydroxyethylperoxid, Di-t-amylperoxid, 2,5-Dimethylhexen-2,5-diperisononanoat, Acetylcyclohexansulfonylperoxid, Diisopropylperoxydicarbonat, tert-Amylperneodecanoat, tert-Butyl-perneodecanoat, tert-Butylperpivalat, tert-Amylperpivalat, Bis(2,4-dichlorbenzoyl)-peroxid, Diisononanoylperoxid, Didecanoylperoxid, Dioctanoylperoxid, Dilauroylperoxid, Bis(2-methylbenzoyl)peroxid, Disuccinoylperoxid, Diacetylperoxid, Dibenzoylperoxid, tert-Butylper-2-ethylhexanoat, Bis(4-chlorbenzoyl)peroxid, tert-Butylperisobutyrat, tert-Butylpermaleat, 1,1-Bis(tert-butylperoxy)-3,5,5-trimetyhlcyclohexan, 1,1-Bis(tert-butylperhydroperoxid.

Der mindestens eine weitere Radikalbildner ist dabei besonders bevorzugt ausgewählt aus der Gruppe bestehend aus
a) N-Alkoxyaminen gemäß der nachfolgend abgebildeten Strukturformel 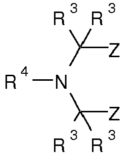 wobei
   - R³: für Wasserstoff oder einen gegebenenfalls substituierter Alkyl-, Cycloalkyl-, Aryl-, Heteroaryl- oder Acyl-Rest steht, insbesondere ein C1 bis C4- Alkylrest ist,
   - R⁴: für einen Alkoxy-, Aryloxy-, Cycloalkoxy-, Aralkoxy- oder Acyloxy-Rest steht,
   - Z: für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
b) Azo-Verbindungen gemäß der nachfolgend abgebildeten Strukturformeln R⁵-N =N -R⁵ oder 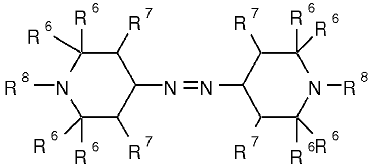 wobei
   - R⁵: einen Alkly-, Cycloalkyl- oder Arylrest bedeutet,
   - R⁶: bei jedem Auftreten gleich oder verschieden ist und einen linearen oder verzweigten Alkylrest bedeutet,
   - R⁷: bei jedem Auftreten gleich oder verschieden ist und Wasserstoff oder einen linearen oder verzweigten Alkylrest bedeutet, und
   - R⁸: bei jedem Auftreten gleich oder verschieden ist und einen Alkyl, Alkoxy-, Aryloxy- Cycloalkyloxy-, Aralkoxy oder Acyloxyrest bedeutet,
c) Dicumyl gemäß der nachfolgend abgebildeten Strukturformel 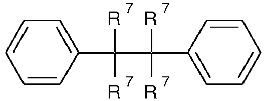 wobei R⁷ die zuvor angegebene Bedeutung aufweist, bevorzugt Methyl ist,
d) und/oder Polycumyl gemäß der nachfolgend abgebildeten Strukturformel 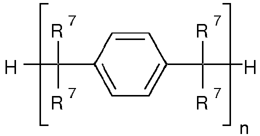 wobei R⁷ die zuvor angegebene Bedeutung aufweist, bevorzugt Methyl ist, und 2 < n < 100.

Typische Beispiele für die zuvor genannten N-Alkoxyamine der angegebenen Struktur sind dabei:
1-Cyclohexyloxy-2,2,6,6-Tetramethyl-4-Octadecylaminopiperidin; Bis(1-Octyloxy-2,2,6,6-Tetramethylpiperidin-4-yl) Sebacat; 2,4-Bis[(1-Cyclohexyloxy-2,2,6,6-Tetramethylpiperidin-4-yl)Butylamino]-6-(2-Hydroxyethylamino-S-Triazin; Bis(1-Cyclohexyloxy-2,2,6,6-Tetramethylpiperidin-4-yl) Adipat; 2,4-Bis[(1-Cyclohexyloxy-2,2,6,6-Tetramethylpiperidin-4-yl)Butylamino]-6-Chloro-S-Triazin; 1-(2-Hydroxy-2-Methylpropoxy)-4-Hydroxy-2,2,6,6-Tetramethylpiperidin; 1-(2-Hydroxy-2-Methylpropoxy)-4-Oxo-2,2,6,6-Tetramethylpiperidin; 1-(2-Hydroxy-2-Methylpropoxy)-4-Octadecanoyloxy-2,2,6,6-Tetramethylpiperidin; Bis(1-(2-Hydroxy-2-Methylpropoxy)-2,2,6,6-Tetramethylpiperidin-4-yl) Sebacat; Bis(1-(2-Hydroxy-2-Methylpropoxy)-2,2,6,6-Tetramethylpiperidin-4-yl) Adipat; 2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin); 4-Piperidinol, 2,2,6,6-tetramethyl-1-(undecyloxy)-, 4,4'-carbonat; das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin); die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin; aliphatische Hydroxylamin wie z.B. Disterarylhydroxylamin; sowie Verbindungen der Formeln 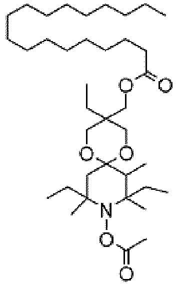 or 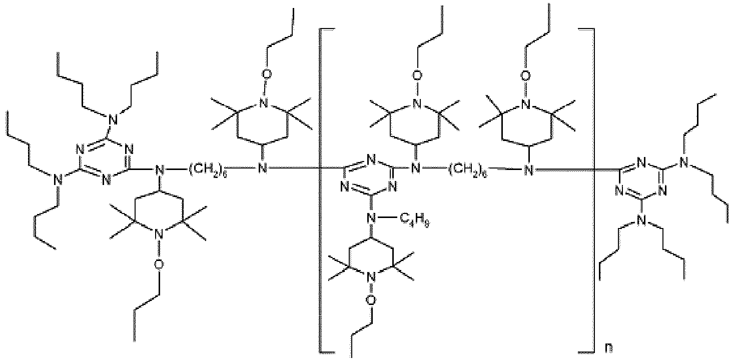 in denen n = 1-15 ist.

Die oben genannten Verbindungen sind teilweise kommerzielle Produkte und werden unter den folgenden Handelsnamen gehandelt: FLAMESTAB NOR 116 (RTM), TINUVIN NOR 371 (RTM), IRGATEC CR 76 (RTM) von BASF SE, Hostavin NOW (RTM) von Clariant oder ADK Stab LA 81 (RTM) von Adeka. Dicumyl und Polycumyl sind Handelsprodukte, die z.B. von United Initiators bezogen werden können.

Die Kunststoffe können bevorzugt übliche Zusatzstoffe beinhalten, z.B. Zusatzstoffe ausgewählt aus der Gruppe bestehend aus UV-Absorber, der Lichtstabilisatoren, der Stabilisatoren, der Hydroxylamine, der Benzofuranone, der Flammschutzmittel, der Nukleierungsmittel, Schlagzähigkeitsverbesserer, Weichmacher, Gleitmittel, Rheologiemodifikatoren, Verarbeitungshilfsmittel, Pigmente, Farbstoffe, optische Aufheller, antimikrobielle Wirkstoffe, Antistatika, Slipmittel, Antiblockmittel, Kopplungsmittel, Kettenverlängerer, Dispergiermittel, Kompatibilisatoren, Sauerstofffänger, Säurefänger, Markierungsmittel oder Antifoggingmittel eingesetzt werden. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat, Calciumstearoyl-2-lactylat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert-*butyl-2'-hydroxyphenyl)-5-chlorobenzotriazol, 2-(3'-*tert*-Butyl-2'-hydroxy-5'-methylphenyl-5-chlorobenzotriazol, 2-(3'-*sec*-Butyl-5'-*tert*-butyl-2'-hydroxyphenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxy-carbonylethyl)phenyl)-5-chlorobenzotriazol, 2-(3'-*tert*-Butyl-5'-[2-(2-ethylhexyloxy)carbonylethyl]-2'-hydroxyphenyl)-5-chlorobenzotriazol, 2-(3'-*tert*-Butyl-2'-hydroxy-5'-(2-methoxycarbonylethyl)phenyl)-5-chlorobenzo-triazol, 2-(3'-*tert*-Butyl-2'-hydroxy-5'-(2-methoxycarbonylethyl)phenyl)-benzotriazol, 2-(3'-*tert*-Butyl-2'-hydroxy-5'-(2-octyloxycarbonylethyl)phenyl)-benzotriazol, 2-(3'-*tert*-Butyl-5'-[2-(2-ethylhexyloxy)carbonylethyl]-2'-hydroxyphenyl)benzotriazol, 2-(3'-Dodecyl-2'-hydroxy-5'-methylphenyl)-benzotriazol, 2-(3'-*tert*-Butyl-2'-hydroxy-5'-(2-isooctyloxycarbonylethyl)-phenylbenzotriazol, 2,2'-Methylenbis[4-(1,1,3,3-tetramethylbutyl)-6-benzotriazol-2-ylphenol]; das Produkt der Umesterung von 2-[3'-*tert-*Butyl-5'-(2-methoxycarbonylethyl)-2'-hydroxyphenyl]-2H-benzotriazol mit Polyethylenglycol 300; [R-CH₂CH₂-COO-CH₂CH₂-]-2, wobei R = 3'-*tert*-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(α,α-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert*-Butylphenylsalicylat, Phenylsalicylat, Octylphenylsalicylat, Dibenzoylresorcinol, Bis(4*-tert-*butylbenzoyl)resorcinol, Benzoylresorcinol, 2,4-Di-*tert*-butylphenyl-3,5-di-*tert-*butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert*-butoxanilid, 2-Ethoxy-2'-ethyloxanilid, N,N'-Bis(3-dimethylaminopropyl)oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxydisubstituierten Oxaniliden und Mischungen von o- und p-Ethoxydisubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxy-propyloxy]phenyl}-4,6-bis(2,4-dimethylphenyl-1,3,5-triazin.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)-oxylyldihydrazid, N,N'-Bis(salicyloyl)thiopropionyldihydrazid.

Insbesondere als Metalldesaktivatoren geeignet sind die folgenden Strukturen:

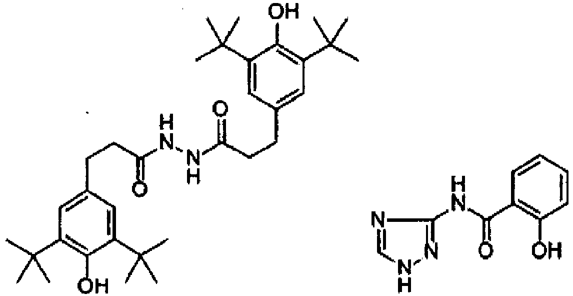

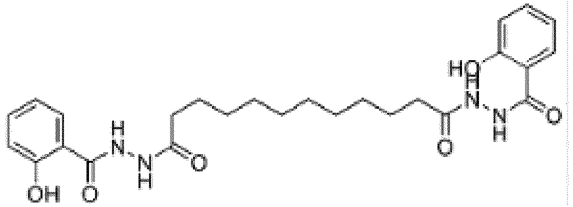

Geeignete phenolische Antioxidantien sind beispielsweise:
Alkylierte Monophenole, wie z.B. 2,6-Di-*tert*-butyl-4-methylphenol, 2*-tert-*Butyl-4,6-dimethylphenol, 2,6-Di-*tert*-butyl-4-ethylphenol, 2,6-Di-tert-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethyl-phenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-*sec-*amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert-*butylphenol), 2,2'-Ethylidenbis(4,6-di-*tert*-butylphenol), 2,2'-Ethylidenbis(6-*tert*-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-*tert*-butyl-5-methyl-2-hydroxybenzyl)-4-methylphenol, 1,1,3-Tris(5-tert-butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-tert-butyl-4'-hydroxyphenyl)butyrat], Bis(3-*tert*-butyl-4-hydroxy-5-methylphenyl)-dicyclopentadien, Bis[2-(3'-*tert*-butyl-2'-hydroxy-5'-methylbenzyl)-6-*tert-*butyl-4-methylphenyl]terephthalat, 1,1-Bis-(3,5-dimethyl-2-hydroxyphenyl)-butan, 2,2-Bis(3,5-di-*tert*-butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert-*butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzyl-mercaptoacetat, Tridecyl-4-hydroxy-3,5-di-*tert*-butylbenzylmercaptoacetat, Tris(3,5-di-*tert*-butyl-4-hydroxybenzyl)amin, , Bis(4-*tert*-butyl-3-hydroxy-2,6-dimethylbenzyl)dithioterephthalat, Bis(3,5-di-*tert*-butyl-4-hydroxybenzyl)-sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert-*butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-*tert*-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert*-butyl-4-hydroxphenylethyl)-1,3,5-triazin, 1,3,5-Tris(3,5-di-*tert*-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzyl-phosphonat, Dietyhl-3,5-di-*tert*-butyl-4-hydroxybenzylphosphonat, Dioctadecyl-3,5-di-*tert*-butyl-4-hydroxybenzylphosphonat, Dioctadecyl-5-*tert-*butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert*-butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol,
Trimethylolpropan, 4-Hydroxymethyl-1-phospha-2,6,7-trioxabicyclo[2.2.2]octan.
Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-*tert*-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard^{®}XL-1, vertrieben durch Uniroyal);
Ascorbinsäure (Vitamin C).

Besonders bevorzugte phenolische Antioxidantien sind:
Octadecyl-3-(3,5-di-*tert*-butyl-4-hydroxyphenyl)propionat, Pentaerythritol-tetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)-pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)penta-erythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)-methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

Besonders bevorzugte Phosphite/Phosphonite sind:

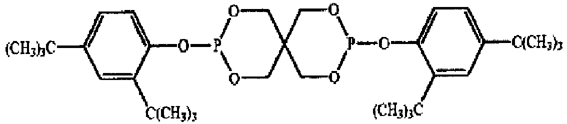

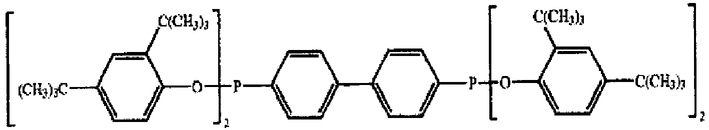

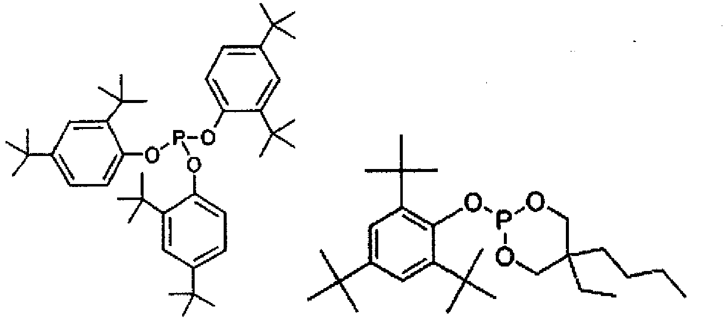

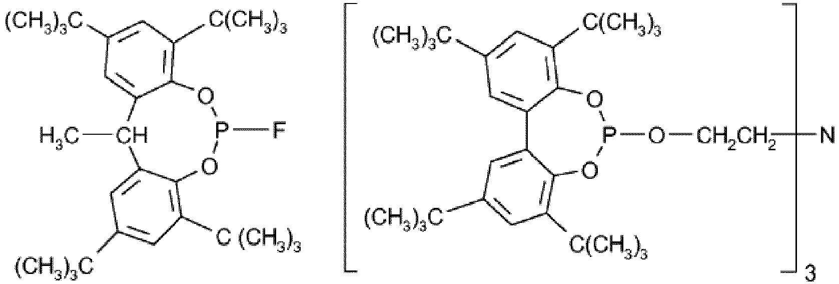

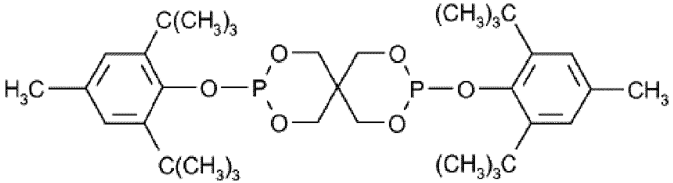

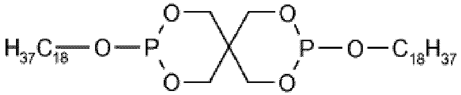

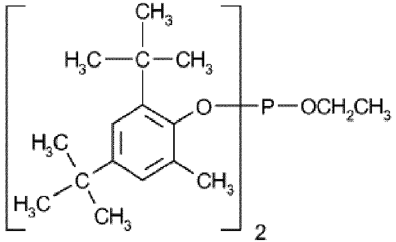

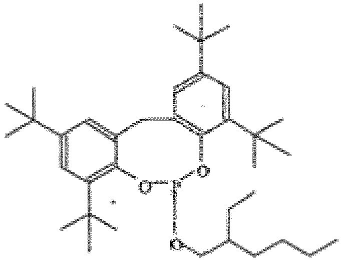

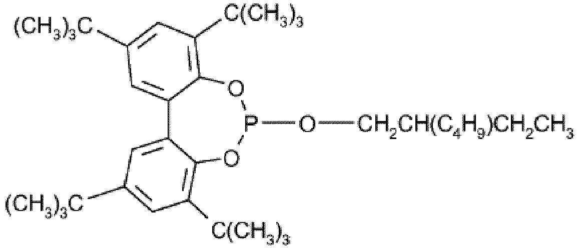

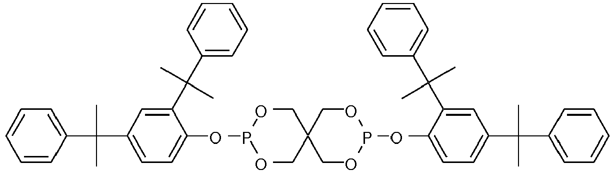

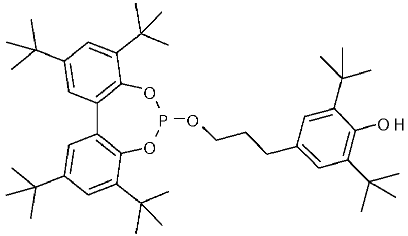

Weitere geeignete Stabilisatoren sind aminische Antioxidantien. Geeignete aminische Antioxidantien sind beispielsweise:
N,N'-Di-isopropyl-p-phenylendiamin, N,N'-Di-*sec-*butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec-*butyl-p-phenylendiamin, Diphenylamin, N-Allyldiphenylamin, 4-Isopropoxydiphenylamin, N-Phenyl-1-naphthylamin, N-(4-*tert*-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenyl-methan, 1,2-Bis[(2-methylphenyl)amino]ethan, 1,2-Bis(phenylamino)-propan, (o-Tolyl)biguanid, Bis[4-(1',3'-dimethylbutyl)phenyl]amin, tert-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert-*Butyl/*tert*-Octylphenothiazinen, ein Gemisch aus mono- und dialkylierten *tert-*Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxyl-amin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel:

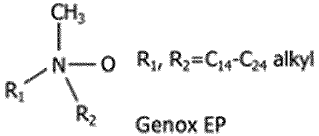

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel:

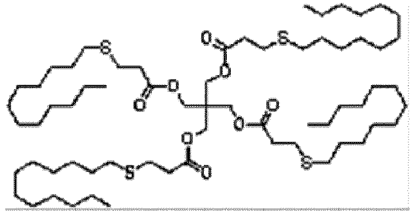

Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin-Kupfer-(I)-Komplexe.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxy-piperidin und Succinsäure, lineare oder zyklische Kondensationsprodukte von N,N'-Bis(2,2,6,6-tetramethyl-4-piperidyl )hexamethylendiamin und 4*-tert-*Octylamino-2,6-dichloro-1,3,5-triazin, Tris(2,2,6,6-tetramethyl-4-piperidyl)nitrilotriacetat, Tetrakis(2 ,2,6,6-tetramethyl-4-piperidyl)-1,2,3,4-butantetracarboxylat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Geeignete Flammschutzmittel sind beispielsweise:
a) anorganischen Flammschutzmitteln wie z.B. Al(OH)₃, Mg(OH)₂, AIO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmitteln wie z.B. Melamin, Melem, Melam, Melon, Melaminderivate, Melaminkondensationsprodukte oder Melaminsalze, Benzoguanamin, Polyisocyanurate, Allantoin, (Poly)Phosphacene, insbesondere Melamincyanurat, Melaminphosphat, Dimelaminphosphat, Melaminpyrophosphat, Melaminpolyphosphat, Melamin-methanphosphonat, Melamin-Metall-Phosphate wie z.B. Melaminaluminiumphosphat, Melaminzinkphosphat, Melaminmagnesiumphosphat, sowie die entsprechenden Pyrophosphate und Polyphosphate, Ethylendiamin-methanphosphonat, Poly-[2,4-(piperazin-1,4-yl)-6-(morpholin-4-yl)-1,3,5-triazin], Ammoniumpolyphosphat, Melaminborat, Melaminhydrobromid,
c) Phosphorhaltigen Flammschutzmitteln wie z.B. anorganische oder organische Phosphonate wie z.B. Aluminiumphosphonat, Phosphonatester, oligomere und polymere Derivate der Methanphosphonsäure, roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphat, 9,10-Dihydro-9-oxa-10-phosphoryl-phenanthren-10-oxid (DOPO) und deren substituierte Verbindungen,
d) Halogenhaltigen Flammschutzmitteln auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)-phosphat, Tetrabromphthalsäure, 1,2-Bis(tribromphenoxy)ethan, Hexabromcyclododecan, bromiertes Diphenylethan, Tris-(2,3-dibrompropyl)-isocyanurat, Ethylen-bis(tetrabromophthalimid), Tetrabromobisphenol-A-bis(2,3)dibromopropylether),Tetrabromo-bisphenol A, bromiertes Polystyrol, bromiertes Polybutadien bzw, Polystyrol-bromiertes Polybutadien-Copolymere, bromiertes Epoxidharz, Polypentabrombenzylacrylat, bromierte Polyphenylenether, ggf. in Kombination mit Sb₂O₃ und/oder Sb₂O₅,
e) Boraten wie z.B. Zinkborat oder Calciumborat, ggf auf Trägermaterialien wie Silica
f) Schwefelhaltige Verbindungen wie z.B. wie z.B. elementarer Schwefel, Disulfide und Polysulfide, Thiuramsulfid, Dithiocarbamate, Mercaptobenzthiazol und Sulfenamide,
g) Antidrip-Mitteln wie z.B. Polytetrafluorethylen,
h) siliciumhaltigen Verbindungen wie z.B. Polyphenylsiloxane
i) Kohlenstoffmodifikationen wie z.B Kohlenstoff-Nanoröhren (CNT) oder Graphen
sowie Kombinationen oder Mischungen hieraus.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminium-hydroxy-bis(4-*tert*-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide wie z.B. gemäß der folgenden Strukturen

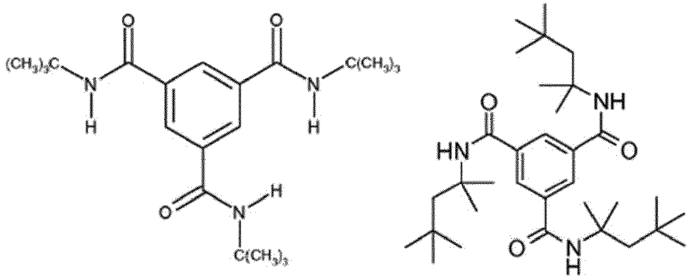

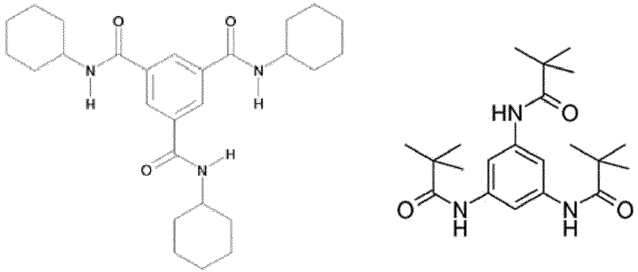

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose,synthetische Fasern oder Metallfasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Pigmente können anorganischer oder organischer Natur sein. Geeignete anorganische Pigmente sind beispielsweise Titandioxid, Zinkoxid, Zinksulfid, Eisenoxid, Ultramarin, Ruß. Geeignete organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Optische Aufheller sind beispielsweise Bisbenzoxazole, Phenylcumarine oder Bis(styryl)biphenyle und insbesondere optische Aufheller der Formeln:

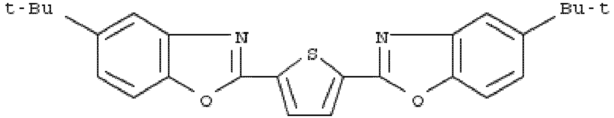

Geeignete Füllstoffdesaktivatoren sind beispielsweise glycidylbasierte Epoxide wie z.B. Bis-phenol-A-diglycidylether oder Bisphenol-F-diglycidylether und deren oligomeren oder polymeren Harze, Polysiloxane, Polyacrylate insbesondere Blockcopolymere wie Polymethacrylsäure-polyalkylenoxid oder Polystyrol-Polyacrylat-Polyglycidyl(meth)acrylat-Copolymere.

Geeignete Antistatika sind beispielsweise ethoxylierte Alkylamine, Fettsäureester, Alkylsulfonate und Polymere wie z.B. Polyetheramide oder Copolymere, die Salze der Acrylsäure beinhalten, wie z.B. Polyethylen-Polyacrylat-Polyacrylat-Na-Copolymere.

Gemäß der vorliegenden Erfindung können die zuvor dargestellten organischen Oxyimide für die Modifizierung (Abbau, Vernetzung, Pfropfung) der folgenden Kunststoffe eingesetzt werden:
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat, Polymethacrylimid
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP,
k) Polyimide, Polyamid-imide, Polyetherimide, Polyesterimide, Poly(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV)
m) Polycarbonate, Polyestercarbonate, sowie Blends wie z.B. PC/ABS, PC/PBT, PC/PET/PBT, PC/PA
n) Cellulosederivate wie z.B. Cellulosenitrat, Celluloseacetat, Cellulosepropionat, Cellulosebutyrat,
o) sowie Mischungen, Kombinationen oder Blends aus zwei oder mehr der zuvor genannten Polymere.

Sofern es sich bei den unter a) bis n) angegebenen Polymeren um Copolymere handelt, können diese in Form von statistischen ("random"), Block- oder "tapered" Strukturen vorliegen.

Sofern es sich bei den unter a) bis n) angegebenen Polymeren um stereoreguläre Polymere handelt, können diese in Form von isotaktischen, stereotaktischen, aber auch ataktischen Formen oder in Stereoblockstrukturen vorliegen.

Weiterhin können die unter a) bis n) angegebenen Polymere sowohl amorphe als auch (teil-)kristalline Morphologien aufweisen.

Die genannten Polymeren a) bis n) können dabei nicht nur als Neuware sondern auch in Form von Rezyklaten vorliegen, z.B. als Produktionsabfälle oder aus Wertstoffsammlungen ("post-consumer" Rezyklate).

Erfindungsgemäß lassen sich die Oxyimide der eingangs erwähnten Formel I auch insbesondere in den folgenden duromeren oder elastomeren, nichtthermoplastischen Kunststoffen als Radikalgeneratoren verwenden:
a) Epoxidharze, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
b) Phenolharze wie z.B. Phenol-Formaldehyd-Harze, Harnstoff-Formaldehyd-Harze, Melamin-Formaldehydharze,
c) ungesättigte Polyesterharze aus ungesättigten Dicarbonsäuren und Diolen,
d) Silikone,
e) Polyurethane als Reaktionsprodukte aus di- oder polyfunktionellen Isocyanaten und Polyolen, Polyharnstoffe,
f) Alkydharze, Allylharze.

Ganz besonders bevorzugt werden die erfindungsgemäßen Radikalgeneratoren zur Modifizierung bei Polyolefinen, vorzugsweise Polypropylen und/oder Polyethylen und deren Copolymeren und Blends sowie für ungesättigte Polyesterharze eingesetzt.

Ganz besonders bevorzugt werden die erfindungsgemäßen Radikalgeneratoren, vorzugsweise zum Molekulargewichtsabbau von Polypropylen und/oder zur Vernetzung von Polyethylen oder ungesättigten Polyesterharzen und deren Copolymeren und Blends sowie zur Pfropfung von ungesättigten Monomeren auf Polypropylen oder Polyethylen eingesetzt.

Für die Vernetzungreaktion sind dabei die Hydroxyimide und die Hydroxyimidether besonders bevorzugt.

Insbesondere bei Kombinationen des erfindungsgemäß verwendeten Oxyimid mit mindestens einem zusätzlichen Radikalbildner ergeben sich synergistische Effekte. Der zusätzliche Radikalbildner ist dabei bevorzugt ausgewählt aus der Gruppe bestehend aus den weiter oben beschriebenen bevorzugt einzusetzenden Radikalbildnern. Zur Vermeidung von Wiederholungen wird auf die voranstehenden Ausführungsformen hinsichtlich der zusätzlichen Radikalbildnern Bezug genommen.

Im Falle einer kombinatorischen Verwendung des erfindungsgemäß verwendeten Oxyimids mit mindestens einem weiteren Radikalbildner ist es bei der vorliegenden Erfindung bevorzugt, wenn die zuvor genannten Verbindungen in einem Gewichtsverhältnis (Oxyimid:Flammschutzmittel) von 99 : 1 bis 1 : 99, bevorzugt von 5 : 95 bis 50 : 50, besonders bevorzugt von 10 : 90 bis 30 : 70 verwendet werden.

Vorteilhaft ist bei der Erfindung ferner, wenn die organischen Oxyimide, bezogen auf die Kunststoffe, zu 0,01 bis 30 Gew.-%, bevorzugt zu 0,1 bis 20 Gew.-%, besonders bevorzugt zu 1 bis 10 Gew.-% eingesetzt werden.

Zudem betrifft die vorliegende Erfindung ein Verfahren zur Generierung von Radikalen in Kunststoffen, bei dem mindestens ein organisches Oxyimid, enthaltend mindestens eine Strukturelement der zuvor beschriebenen Formel I mit einem Kunststoff oder mindestens einer mindestens einen Kunststoff enthaltenen Formmasse vermischt und aktiviert wird. Bei der Aktivierung werden dabei Radikale freigesetzt. Erfindungsgemäß erfolgt die Aktivierung thermisch oder durch Bestrahlung. Erfindungsgemäß wird die Aktivierung simultan während eines formgebenden Verfahrens des Kunststoffes bzw. der den Kunststoff enthaltenden Formmasse vorgenommen, nämlich durch Spritzgießen oder Extrusion. Bei diesen Verfahren werden die Kunststoffe über ihre Plastifizierungstemperatur, ab denen der Kunststoff bzw. die den Kunststoff enthaltende Formmasse plastifizierten Zustand vorliegt, erwärmt.

Die Erfindung betrifft zudem die Verwendung des zuvor genannten Verfahrens zur Modifikation von Kunststoffen.

Besonders bevorzugt werden die Oxyimide gemäß der vorliegenden Erfindung als Radikalgeneratoren zum kontrollierten Abbau von Polymeren, insbesondere Polyolefinen, insbesondere Polypropylen oder zur Vernetzung von Polymeren, insbesondere Polyolefinen oder ungesättigten Polyestern, als Radikalbildner zur Pfropfung von ungesättigten Verbindungen auf Polymere, insbesondere Polyolefine verwendet.

Bezüglich der spezifischen Details der organischen Oxyimide, die beim erfindungsgemäßen Verfahren bzw. bei den Verwendungszwecken des Verfahrens eingesetzt werden können, wird auf die zuvor gemachten Ausführungsformen verwiesen. Sämtliche der voranstehend beschriebenen bevorzugten Ausführungsformen gelten uneingeschränkt ebenso auch für das voranstehend beschriebene erfindungsgemäße Verfahren bzw. die erfindungsgemäße Verwendung des erfindungsgemäßen Verfahrens.

Die vorliegende Erfindung wird anhand der nachfolgenden Ausführungen näher beschrieben, ohne die Erfindung auf die Beispiele zu beschränken.

### Beispiel 1: Molekulargewichtsabbau von Polypropylen

Die Extrusionen der Polypropylen-Proben (Moplen HP 500N) unter Zugabe der Radikalgeneratoren erfolgen bei der angegebenen Temperatur und einer Schneckendrehzahl von 400 U/min auf einem 11 mm Doppelschneckenextruder (Process 11 von Thermo Scientific). Das gewünschte Verhältnis aus Polymer und Additiven wird zunächst durch Mischen homogenisiert und über eine volumetrische Dosierung der Extrusion zugeführt. Von den granulierten extrudierten Proben wurde anschließend der MVR (Melt Volume Rate) bei 230 °C/2,16 kg nach ISO 1133 und das Gewichtsmittel des Molekulargewichts mittels Hochtemperatur-Gelpermeationschromatographie bestimmt.

**Tabelle 1: Zusammensetzungen in Polypropylen und Ergebnisse der Analysen der Schmelze-Volumenfließraten und des Molekulargewichts**

| Versuchsnr. | Zusatz | Extrusionstemperatur [°] | MVR | Mw |
|---|---|---|---|---|
| Vergleichsbeispiel 1 | ohne | 240 | 14 | 400.000 |
| Vergleichsbeispiel 2 | ohne | 260 | 15 | 381.000 |
| Vergleichsbeispiel 3 | ohne | 280 | 22 | 362.000 |
| Vergleichsbeispiel 4 | ohne | 300 | 25 | n.b. |
| Erfindungsgemäßes Beispiel 1 | 0.1 % Oxyimid 1 | 280 | 45 | n.b. |
| Beispiel 2 | 0.2 % Oxyimid 1 | 280 | 61 | 244.000 |
| Beispiel 3 | 0.5 % Oxyimid 1 | 280 | 84 | n.b. |
| Beispiel 4 | 0.2 % Oxyimid 1 | 240 | 25 | 346.000 |
| Beispiel 5 | 0.2 % Oxyimid 1 | 260 | 30 | 317.000 |
| Beispiel 6 | 0.2 % Oxyimid 1 | 300 | >200 | n.b. |
| Beispiel 7 | 0.1 % Oxyimid 2 | 280 | 27 | n.b. |

| | | | | |
|---|---|---|---|---|
| n.b. = nicht bestimmt | | | | |

### Oxyimid 1 = N- Hydroxyphthalimid

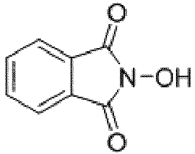

Oxyimid 2 (hergestellt gemäß WO 2014154636)

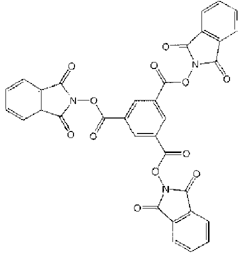

Es zeigt sich überraschenderweise dass die Zusammensetzungen mit den erfindungsgemäßen Oxyimiden einen höheren MVR (= niedrigeres Molekulargewicht) und ebenso in der GPC-Messung ein niedrigeres Molekulargewicht aufweisen als die Vergleichsbeispiele. Mit zunehmender Konzentration an Oxyimid und zunehmender Verarbeitungstemperatur nimmt weiterhin das Molekulargewicht ab.

### Beispiel 2: Molekulargewichtsaufbau von Polyethylen

Die Molekuargewichtserhöhung der PE-Typen (erhältlich bei ExxonMobil) via Reaktivextrusion mit *N*-Hydroxyphthalimid (NHPI) erfolgte bei 200°C, einer Schneckendrehzahl von 300 rpm auf einem 11 mm Doppelschneckenextruder (Process 11 von Thermo Scientific). Die Analysen der Schmelze-Volumenfließraten (MVR) erfolgten gemäß ISO 1133 bei einer Temperatur von 190°C und einem Gewicht von 5 kg bzw. 10kg.

**Tabelle 2: Zusammensetzungen in Polyethylen und Ergebnisse der Analysen der Schmelze-Volumenfließraten**

| Beispiel | Zusammensetzung | | MVR (5kg, 190°C) / cm^{3∗}min⁻¹ | MVR (10kg, 190°C) / cm^{3∗}min⁻¹ |
|---|---|---|---|---|
| Vergleichsbeispiel 1 | LDPE (LD 185 BW) NHPI | 100% 0% | 10,2 | 31,7 |
| Erfindungsgemäßes Beispiel 1 | LDPE (LD 185 BW) NHPI | 99,80% 0,20% | 9,9 | - |
| Erfindungsgemäßes Beispiel 2 | LDPE (LD 185 BW) NHPI | 99,60% 0,40% | 9,7 | - |
| Erfindungsgemäßes Beispiel 3 | LDPE (LD 185 BW) NHPI | 99,20% 0,80% | 9,0 | 31,2 |
| Vergleichbeispiel 2 | HDPE (HTA 108) NHPI | 100% 0% | - | 12,9 |
| Erfindungsgemäßes Beispiel 4 | HDPE (HTA 108) NHPI | 99,20% 0,80% | - | 12,5 |

Anhand der signifikanten Verringerung der MVR-Werte der erfindungsgemäßen Beispiele gegenüber den Vergleichsbeispielen zeigt sich eine Erhöhung der Schmelzviskosität, was auf eine Erhöhung des Molekulargewichtes zurückzuführen ist. Somit ist eine kontrollierte Erhöhung des Molekulargewichtes, durch die innerhalb der vorliegenden Anmeldung beschrieben Methode, festzuhalten.

## Patentansprüche

1. Verwendung von organischen Oxyimiden, enthaltend mindestens ein Strukturelement der nachfolgend abgebildeten Formel I 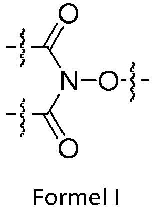 als Radikalgeneratoren in Kunststoffen, wobei die organischen Oxyimide mit einem Kunststoff oder einer mindestens einen Kunststoff enthaltenden Formmasse vermischt und aktiviert werden, wobei die Aktivierung thermisch oder durch Bestrahlung erfolgt und die Aktivierung während eines formgebenden Verfahrens des Kunststoffs oder der mindestens einen Kunststoff enthaltenden Formmasse erfolgt und das formgebenden Verfahren Spritzgießen oder Extrusion ist.

2. Verwendung nach Anspruch 1, **dadurch gekennzeichnet, dass** das Oxyimid ausgewählt ist aus der Gruppe bestehend aus
a) Oxyimiden, enthaltend mindestens ein Strukturelement der nachfolgenden Formel II 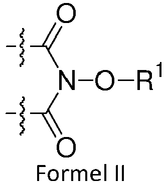 wobei R¹ für Wasserstoff oder einen gegebenenfalls substituierter Alkyl-, Cycloalkyl-, Aryl-, Heteroaryl- oder Acyl-Rest steht, sowie
b) verbrückten Oxyimiden, enthaltend mindestens ein Strukturelement der nachfolgenden Formel III 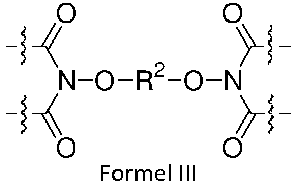 wobei R² für einen gegebenenfalls substituierten Alkylen-, Cycloalkylen-, Arylen-, Heteroarylen- oder verbrückenden Acyl-Rest steht.

3. Verwendung nach vorhergehendem Anspruch, **dadurch gekennzeichnet, dass** R² ausgewählt ist aus Resten der Gruppe bestehend aus -(CH₂)ₙ- mit n = 1 bis 18, -CH(CH₃)-, -C(CH₃)₂-, -O-, -S-, -SO₂-, - NHCO-, -CO- sowie den nachfolgend abgebildeten Gruppen 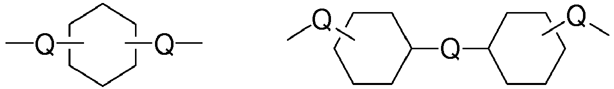 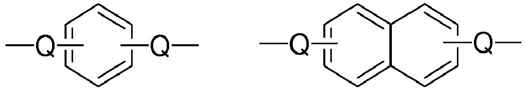 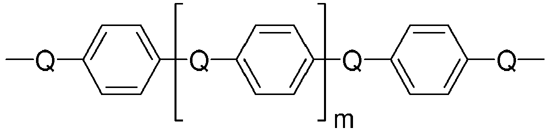 wobei die in den zuvor abgebildeten Gruppen enthaltenen cycloaliphatischen oder aromatischen Ringsysteme unsubstituiert oder durch eine oder mehrere Alkyl- und/oder Alkoxygruppen substituiert sind,
Q bei jedem Auftreten gleich oder verschieden ist und ausgewählt ist aus der Gruppe bestehend aus einer chemischen Bindung sowie den Resten -(CH₂)ₙ- mit n = 1 bis 18, -CH(CH₃)-, -C(CH₃)₂-, -O-, -S-, -SO₂-, -NHCO-, -CO-, -OC(O)-O-und
m 0 oder 1 bis 18 ist.

4. Verwendung nach einem der vorhergehenden Ansprüche, **dadurch gekennzeichnet, dass** das organische Oxyimid eine der nachfolgenden Formeln aufweist 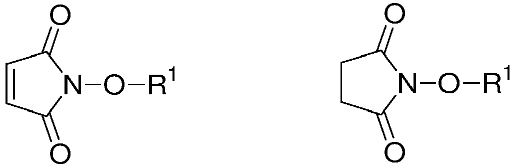 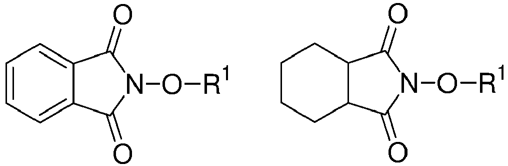 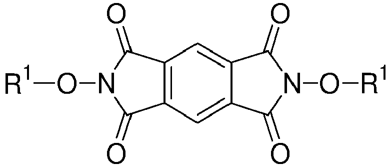 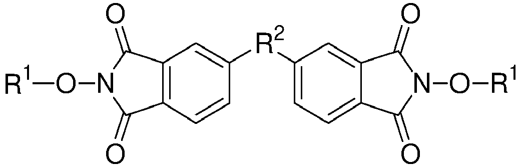 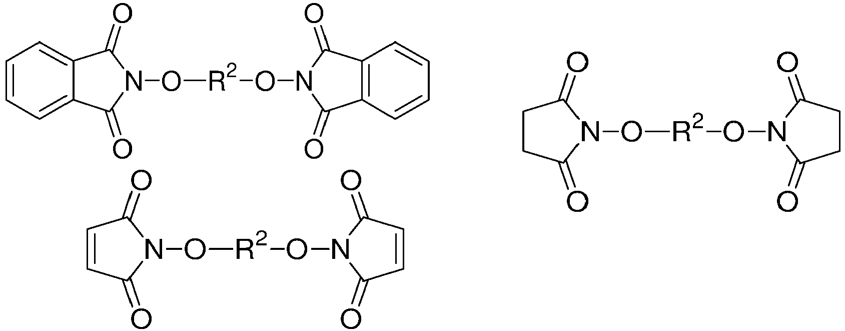 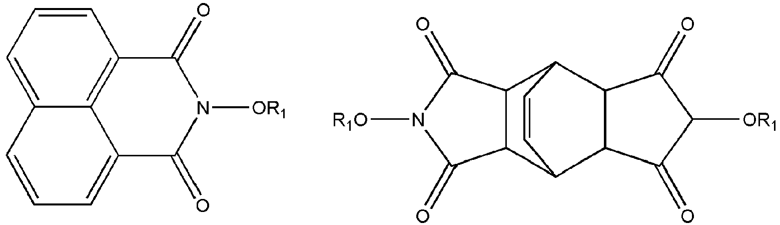 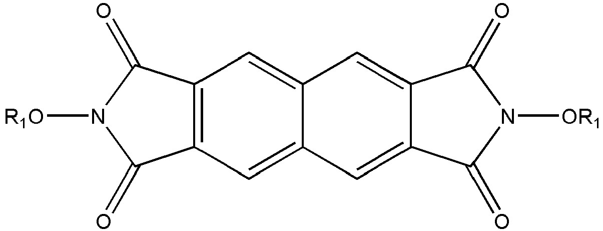 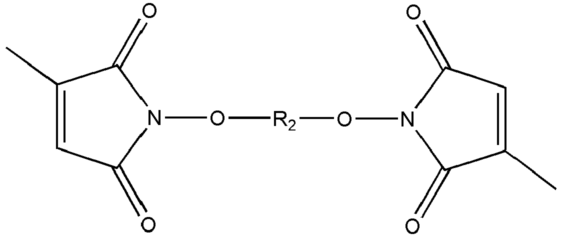 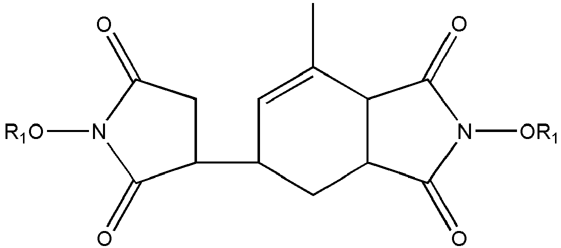 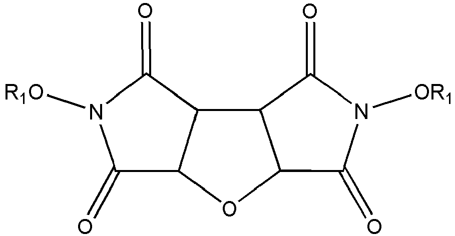 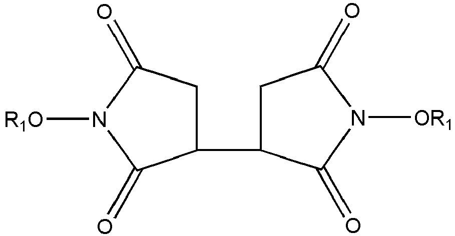 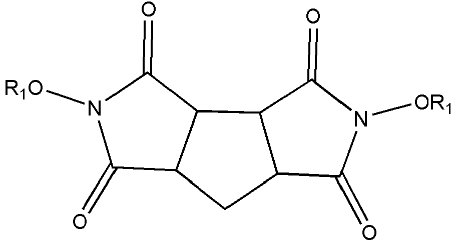 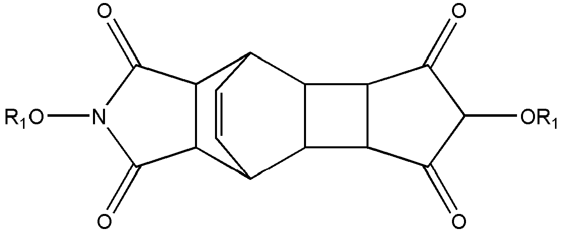 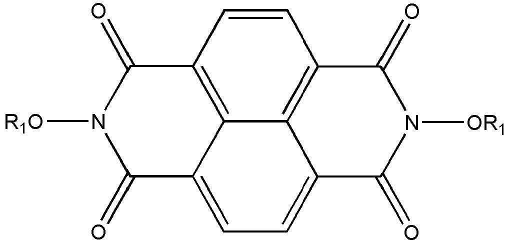 wobei jeweils R¹ und R² die oben angegebene Bedeutung aufweisen.

5. Verwendung nach einem der Ansprüche 2 bis 4, **dadurch gekennzeichnet, dass** R¹ = H, R¹ = Alkyl oder R¹ = Acyl ist.

6. Verwendung nach einem der vorhergehenden Ansprüche, **dadurch gekennzeichnet, dass** die organischen Oxyimide gemäß Formel I in Kombination mit mindestens einem Kettenüberträger, insbesondere mindestens einem Kettenüberträger ausgewählt aus der Gruppe bestehend aus Thiolen, Disulfiden, Phosphorsäureestern, Phosphinen, organische Halogeniden wie lodiden, Bromiden, Chloriden, Säureestern, Aldehyden oder tertiäre Aminen, inbesondere Kettenüberträgern mit einen Siedepunkt oberhalb der Verarbeitungstemperatur des Kunststoffs verwendet werden.

7. Verwendung nach einem der vorhergehenden Ansprüche, **dadurch gekennzeichnet, dass** die organischen Oxyimide gemäß Formel I in Kombination mit
• mindestens einer mehrfunktionellen Verbindung ausgewählt aus der Gruppe bestehend aus
a) mehrfach ungesättigten Oligomeren und Polymeren auf der Basis von Poly-butadien oder Poly-isopren,
b) Di- und Poly-vinylverbindungen wie z.B. Divinyl-benzol,
c) Di- und Poly-allylverbindungen, wie z.B. Polyallylether oder Polyallylester, Trisallylisocyanurat, Trisallylcyanurat, Diallyl-Bisphenol-A
d) Di- und Polymaleimiden,
e) Di- und Poly(meth)acyrylester von Di- und Polyalkoholen, und/oder
f) organofunktionellen Silanen,
• mindestens einem Nitroxylradikal
und/oder
• mindestens einer katalytischen Verbindung, insbesondere ausgewählt aus der Gruppe bestehend aus Metallsalze von Übergangsmetallen wie z.B. Kupfer, Mangan oder Eisen z.B. in Form der Acetate wie Cu(I)-acetat
verwendet werden.

8. Verwendung nach einem der vorhergehenden Ansprüche, **dadurch gekennzeichnet, dass** die organischen Oxyimide gemäß Formel I mit mindestens einem weiteren Radikalbildner, bevorzugt einem Radikalbildner ausgewählt aus der Gruppe bestehend aus N-Alkoxyaminen, - C-C- Radikalbildnern, Radikalbildnern mit Azogruppen (-N=N-), Radikalbildnern mit Hydrazingruppen (-NH-HN-), Radikalbildnern mit Hydrazongruppen (>C=N-NH-), Radikalbildnern mit Azingruppen (>C=N-N=C<), Radikalbildnern mit Triazengruppen (-N=N-N<), Radikalbildnern mit Disulfid- bzw. Polysulfidgrupen (-S-S-), Radikalbildnern mit Thiolgruppen (-S-H), Thiuramsulfid, Dithiocarbamaten, Mercaptobenzthiazol und Sulfenamiden, insbesondere einem Radikalbildner ausgewählt sind aus der Gruppe bestehend aus
a) N-Alkoxylaminen gemäß der nachfolgend abgebildeten Strukturformel 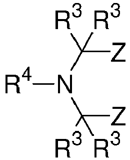 wobei
R ³ für Wasserstoff oder einen gegebenenfalls substituierter Alkyl-, Cycloalkyl-, Aryl-, Heteroaryl- oder Acyl-Rest steht, insbesondere ein C1 bis C4- Alkylrest ist,
R⁴ für einen Alkoxy-, Aryloxy-, Cycloalkoxy-, Aralkoxy- oder Acyloxy-Rest steht,
Z für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können,
der ggf. durch Ester-, Ether-, Amin, Amid, Carboxy- oder Urethangruppen substituiert sein kann,
b) Azo-Verbindungen gemäß der nachfolgend abgebildeten Strukturformeln R⁵-N=N-R⁵ oder 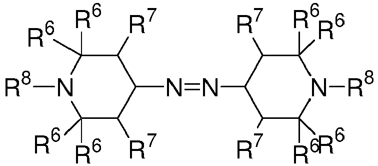 wobei
R⁵ einen Alkly-, Cycloalkyl- oder Arylrest bedeutet,
R⁶ bei jedem Auftreten gleich oder verschieden ist und einen linearen oder verzweigten Alkylrest bedeutet,
R⁷ bei jedem Auftreten gleich oder verschieden ist und Wasserstoff oder einen linearen oder verzweigten Alkylrest bedeutet, und
R⁸ bei jedem Auftreten gleich oder verschieden ist und einen Alkyl, Alkoxy-, Aryloxy- Cycloalkyloxy-, Aralkoxy oder Acyloxyrest bedeutet,
c) Dicumylene gemäß der nachfolgend abgebildeten Strukturformel 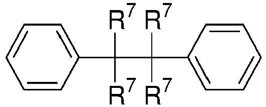 wobei R⁷ die zuvor angegebene Bedeutung aufweist, bevorzugt Methyl ist,
d) und/oder Polycumylene gemäß der nachfolgend abgebildeten Strukturformel 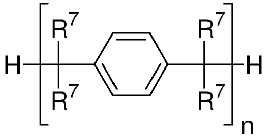 wobei R⁷ die zuvor angegebene Bedeutung aufweist, bevorzugt Methyl ist, und 2 < n < 100.

9. Verwendung nach einem der vorhergehenden Ansprüche, **dadurch gekennzeichnet, dass** die Kunststoffe thermoplastische, elastomere oder duroplastische Polymere sind, wobei die Kunststoffe bevorzugt thermoplastische Polymere sind und insbesondere ausgewählt sind aus der Gruppe bestehend aus
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadienacrylnitril (ABS), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyacrylnitril, Polyacrylamide, Copolymere wie z.B. Polyacrylnitril-Polyalkylacrylat,
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid, Polytetrahydrofuran,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol, Blends von unterschiedlichen Polyamiden wie z.B. PA-6 und PA 6.6 nzw. Blends von Polyamiden und Polyolefinen wie z.B. PA/PP,
k) Polyimide, Polyamid-imide, Polyetherimide, Polyesterimide, Poly(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure,
m) Polycarbonate, Polyestercarbonate, sowie Blends wie z.B. PC/ABS, PC/PBT, PC/PET/PBT, PC/PA
n) Cellulosederivate wie z.B. Cellulosenitrat, Celluloseacetat, Cellulosepropionat, Cellulosebutyrat
o) duroplastischen Kunststoffen,
p) sowie Mischungen, Kombinationen oder Blends aus zwei oder mehr der zuvor genannten Polymere.

10. Verwendung nach einem der vorhergehenden Ansprüche, **dadurch gekennzeichnet, dass** die organischen Oxyimide, bezogen auf die Kunststoffe, zu 0,01 bis 30 Gew.-%, bevorzugt zu 0,1 bis 10 Gew.-%, besonders bevorzugt zu 0,2 bis 5 Gew.-% eingesetzt werden.

11. Verwendung nach einem der vorhergehenden Ansprüche, wobei die Generierung der Radikale zur Modifikation der Kunststoffe, zu Erhöhung des Molekulargewichts der Kunststoffe, zur Verzweigung oder Vernetzung der Kunststoffe, zum Molekulargewichtsabbau der Kunststoffe, zur Beeinflussung einer Molekulargewichtsverteilung der Kunststoffe, zum Pfropfen von ungesättigten Monomeren auf die Kunststoffe verwendete wird.

12. Verfahren zur Generierung von Radikalen in Kunststoffen, bei dem mindestens ein organisches Oxyimiden, enthaltend mindestens ein Strukturelement der nachfolgend abgebildeten Formel I 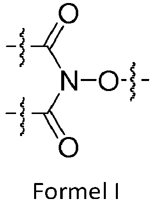 mit einem Kunststoff oder einer mindestens einen Kunststoff enthaltenden Formmasse vermischt und aktiviert wird, wobei die Aktivierung insbesondere thermisch oder durch Bestrahlung erfolgt, wobei die Aktivierung während eines formgebenden Verfahrens des Kunststoffs oder der mindestens einen Kunststoff enthaltenden Formmasse erfolgt und das formgebende Verfahren Spritzgießen oder Extrusion ist.

13. Verwendung des Verfahrens nach vorhergehendem Anspruch zur Modifikation der Kunststoffe, zur Erhöhung des Molekulargewichts der Kunststoffe, zur Verzweigung oder Vernetzung der Kunststoffe, zum Molekulargewichtsabbau der Kunststoffe, zur Beeinflussung einer Molekulargewichtsverteilung der Kunststoffe oder zum Pfropfen von ungesättigten Monomeren auf die Kunststoffe.

14. Verwendung nach vorhergehendem Anspruch zum Abbau des Molekulargewichts von Polypropylen oder zur Vernetzung von Polyethylen.

## Claims

1. Use of organic oxyimides, comprising at least one structural element of subsequently illustrated formula I 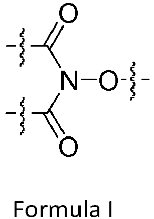 as radical generators in plastic materials, wherein the organic oxyimides are mixed with a plastic material or a moulding compound comprising at least one plastic material and activated, wherein the activation is effected thermally or by irradiation and the activation is effected during a shaping process of the plastic material or of the moulding compound comprising at least one plastic material and the shaping process is injection moulding or extrusion.

2. Use according to claim 1, **characterised in that** the oxyimide is selected from the group consisting of
a) oxyimides, comprising at least one structural element of subsequent formula II 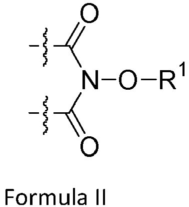 R¹ standing for hydrogen or a possibly substituted alkyl-, cycloalkyl-, aryl- , heteroaryl- or acyl-residue, and also
b) bridged oxyimides, comprising at least one structural element of subsequent formula III, 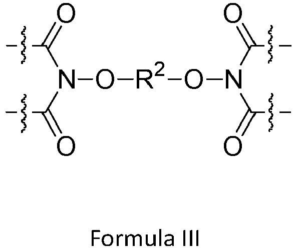 R² standing for a possibly substituted akylene-, cycloalkylene-, arylene-, heteroarylene- or bridging acyl-residue.

3. Use according to the preceding claim, **characterised in that** R² is selected from radicals of the group consisting of
-(CH₂)ₙ- with n = 1 to 18, -CH(CH₃)-, -C(CH₃)₂-, -O-, -S-, -SO₂-,
-NHCO-, -CO- and also the subsequently illustrated groups, 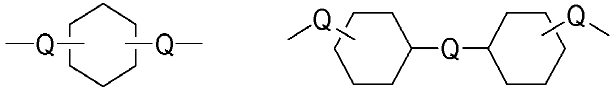 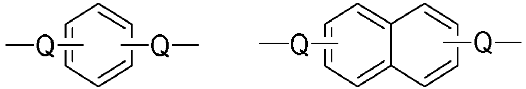 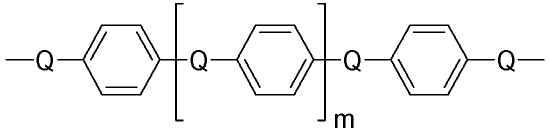
the cycloaliphatic or aromatic ring systems contained in the previously illustrated groups being unsubstituted or substituted by one or more alkyl- and/or alkoxy-groups,
Q upon each occurrence, being the same or different and being selected from the group consisting of a chemical bond and also the radicals -(CH₂)ₙ- with n = 1 to 18, -CH(CH₃)-, -C(CH₃)₂-, -O-, -S-, -SO₂-, -NHCO-, -CO-, OC(O)-O- and
m being 0 or 1 to 18.

4. Use according to one of the preceding claims, **characterised in that** the organic oxyimide has one of the following formulae, 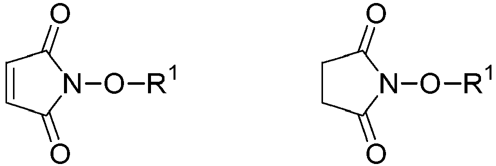 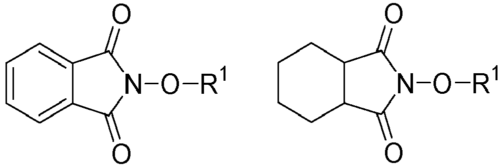 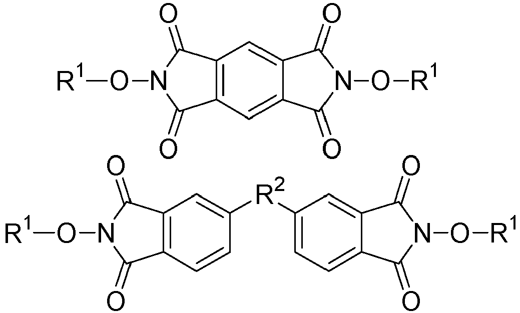 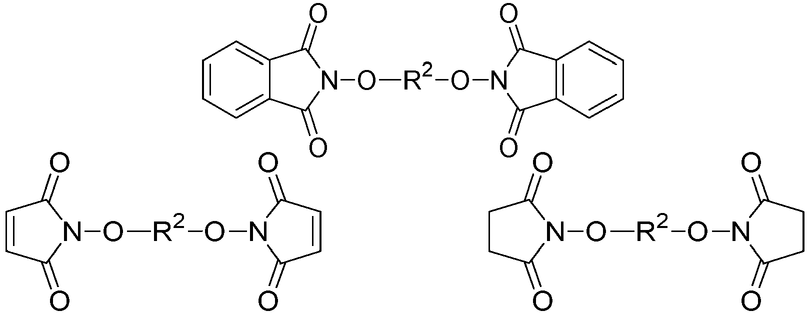 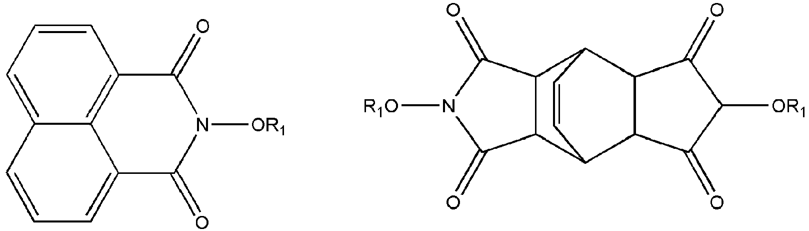 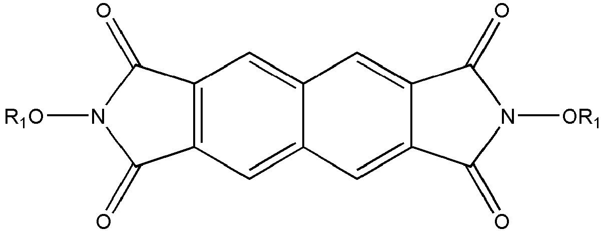 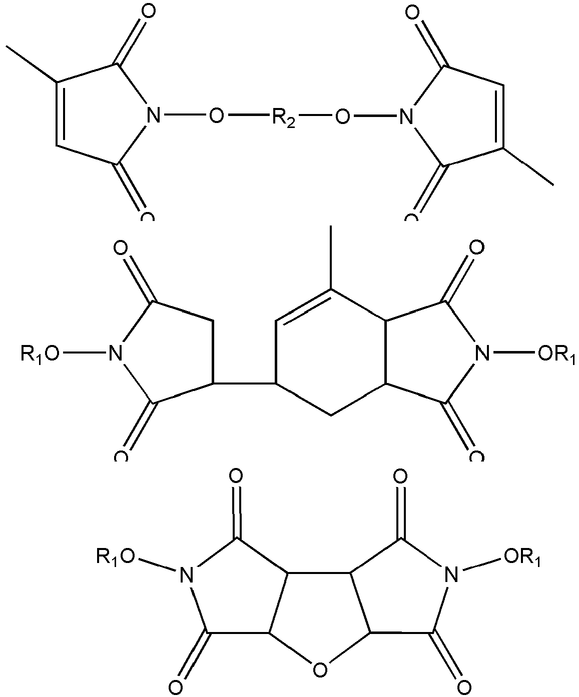 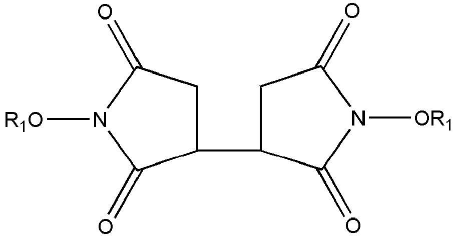 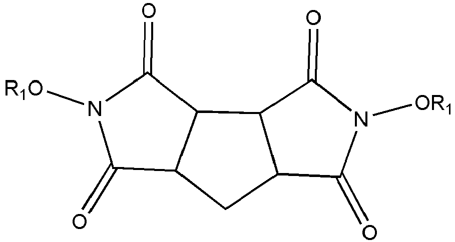 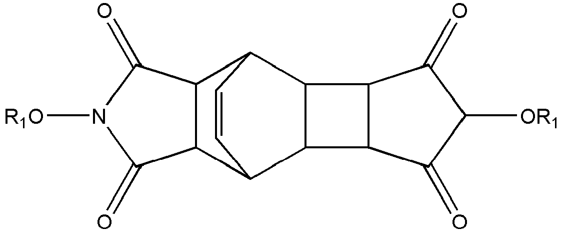 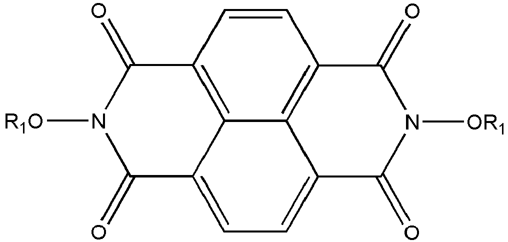 R¹ and R² having respectively the above-indicated meaning.

5. Use according to one of the claims 2 to 4, **characterised in that** R¹ = H, R¹ = alkyl or R¹ = acyl.

6. Use according to one of the preceding claims, **characterised in that** the organic oxyimides according to formula I are used in combination with at least one chain transfer agent, in particular at least one chain transfer agent selected from the group consisting of thiols, disulfides, phosphoric acid esters, phosphines, organic halides, such as iodides, bromides, chlorides, acid esters, aldehydes or tertiary amines, in particular chain transfer agents with a boiling point above the processing temperature of the plastic material.

7. Use according to one of the preceding claims, **characterised in that** the organic oxyimides according to formula I are used in combination with
• at least one multifunctional compound selected from the group consisting of
a) repeatedly unsaturated oligomers and polymers based on polybutadiene or polyisoprene,
b) di- and polyvinyl compounds, such as e.g. divinyl benzene,
c) di- and polyallyl compounds, such as e.g. polyallyl ether or polyallyl ester, trisallyl isocyanuranate, trisallyl cyanurate, diallyl bisphenol-A,
d) di- and polymaleimides,
e) di- and poly(meth)acrylesters of di- and polyalcohols, and/or
f) organofunctional silanes,
• at least one nitroxyl radical
and/or
• at least one catalytic compound, in particular selected from the group consisting of metal salts of transition metals, such as e.g. copper, manganese or iron, for example in the form of acetates, such as Cu(I)acetate.

8. Use according to one of the preceding claims, **characterised in that** the organic oxyimides according to formula I are used with at least one further radical former, preferably a radical former selected from the group consisting of N-alkoxyamines, -C-C- radical formers, radical formers with azo groups (-N=N-), radical formers with hydrazine groups (-NH-HN-), radical formers with hydrazone groups (>C=N-NH-), radical formers with azine groups (>C=N-N=C<), radical formers with triazene groups (-N=N-N<), radical formers with disulfide- or polysulfide groups (-S-S-), radical formers with thiol groups (-S-H), thiuram sulfide, dithiocarbamates, mercaptobenzothiazole and sulphenamides, in particular a radical former selected from the group consisting of
a) N-alkoxyamines according to the subsequently illustrated structural formula 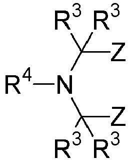
R³ standing for hydrogen or a possibly substituted alkyl-, cycloalkyl-, aryl-, heteroaryl- or acyl-radical, in particular being a C1 to C4 alkyl-radical,
R⁴ standing for an alkoxy-, aryloxy-, cycloalkoxy-, aralkoxy- or acyloxy-radical,
Z standing for hydrogen or a possibly substituted alkyl-, cycloalkyl-, aryl-, heteroaryl- or acyl-radical, the two radicals Z also being able to form a closed ring which can be substituted possibly by ester-, ether-, amine-, amide-, carboxy- or urethane-groups,
b) azo compounds according to the subsequently illustrated structural formulae R⁵-N=N-R⁵ or 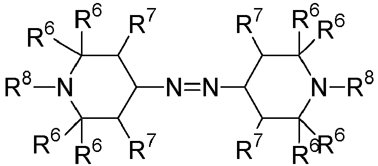
R⁵ meaning an alkyl-, cycloalkyl- or aryl-radical,
R⁶ upon each occurrence, being the same or different and meaning a linear or branched alkyl-radical,
R⁷ upon each occurrence, being the same or different and meaning hydrogen or a linear or branched alkyl-radical, and
R⁸ upon each occurrence, being the same or different and meaning an alkyl-, alkoxy-, aryloxy-, cycloalkyloxy-, aralkoxy or acyloxy-radical,
c) dicumylenes according to the subsequently illustrated structural formula 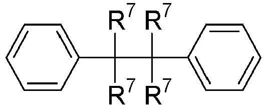 R⁷ having the previously indicated meaning, preferably being methyl,
d) and/or polycumylenes according to the subsequently illustrated structural formula 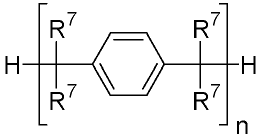 R⁷ having the previously indicated meaning, preferably being methyl, and 2 < n < 100.

9. Use according to one of the preceding claims, **characterised in that** the plastic materials are thermoplastic, elastomeric or duroplastic polymers, the plastic materials preferably being thermoplastic polymers, and in particular being selected from the group consisting of
a) polymers made of olefins or diolefins, such as e.g. polyethylene (LDPE, LLDPE, VLDPE, ULDPE, MDPE, HDPE, UHMWPE), metallocene-PE (m-PE), polypropylene, polyisobutylene, poly-4-methylpentene-1, polybutadiene, polyisoprene, polycyclooctene, polyalkylene-carbon monoxide copolymers, and also copolymers in the form of statistical or block structures, such as e.g. polypropylene-polyethylene (EP), EPM or EPDM, ethylene-vinyl acetate (EVA), ethylene-acrylic ester, such as e.g. ethylene-butyl acrylate, ethylene-acrylic acid and the salts thereof (ionomers), and also terpolymers, such as e.g. ethylene-acrylic acid-glycidylacrylate, graft polymers, such as e.g. polypropylene-graft-maleic anhydride, polypropylene-graft-acrylic acid, polyethylene-graft-acrylic acid, polyethylene-polybutacrylate-graft-maleic anhydride,
b) polystyrene, polymethylstyrene, polyvinyl naphthalene, styrene-butadiene (SB), styrene-butadiene-styrene (SBS), styrene-ethylene-butylene-styrene (SEBS), styrene-ethylene-propylene-styrene, styrene-isoprene, styrene-isoprene-styrene (SIS), styrene-butadiene-acrylonitrile (ABS), styreneacrylonitrile-acrylate (ASA), styrene-ethylene, styrene-maleic anhydride polymers incl. corresponding graft copolymers, such as e.g. styrene on butadiene, maleic anhydride on SBS or SEBS, and also graft copolymers made of methylmethacrylate, styrene-butadiene and ABS (MABS),
c) halogen-containing polymers, such as e.g polyvinyl chloride (PVC), polychloroprene and polyvinylidene chloride (PVDC), copolymers made of vinyl chloride and vinylidene chloride or made of vinyl chloride and vinyl acetate, chlorinated polyethylene, polyvinylidene fluoride,
d) polymers of unsaturated esters, such as e.g polyacrylates and polymethacrylates, such as polymethylmethacrylate (PMMA), polybutylacrylate, polylaurylacrylate, polystearylacrylate, polyacrylonitrile, polyacrylamides, copolymers, such as e.g. polyacrylonitrile-polyalkylacrylate,
e) polymers made of unsaturated alcohols and derivates, such as e.g. polyvinyl alcohol, polyvinyl acetate, polyvinyl butyral,
f) polyacetals, such as e.g. polyoxymethylene (POM) or copolymers with e.g. butanal,
g) polyphenylene oxides and blends with polystyrene or polyamides,
h) polymers of cyclic ethers, such as e.g. polyethylene glycol, polypropylene glycol, polyethylene oxide, polypropylene oxide, polytetrahydrofuran,
i) polyurethanes made of hydroxy-terminated polyethers or polyesters and aromatic or aliphatic isocyanates, in particular linear polyurethanes, polyureas,
j) polyamides, such as e.g. polyamide 6, 6.6, 6.10, 4.6, 4.10, 6.12, 12.12, polyamide 11, polyamide 12 and also (partially) aromatic polyamides, such as e.g. polyphthalamides, e.g. produced from terephthalic acid and/or isophthalic acid and aliphatic diamines or from aliphatic dicarboxylic acids, such as e.g. adipic acid or sebacic acid and aromatic diamines, such as e.g. 1,4- or 1,3-diaminobenzene, blends of different polyamides, such as e.g. PA-6 and PA 6.6 or blends of polyamides and polyolefins, such as e.g. PA/PP,
k) polyimides, polyamide imides, polyether imides, polyester imides, poly(ether)ketones, polysulphones, polyethersulphones, polyarylsulphones, polyphenylene sulphide, polybenzimidazoles, polyhydantoins,
l) polyesters made of aliphatic or aromatic dicarboxylic acids and diols or made of hydroxycarboxylic acids, such as e.g. polyethylene terephthalate (PET), polybutylene terephthalate (PBT), polypropylene terephthalate, polyethylene naphthylate, poly-1,4-dimethylolcyclohexane terephthalate, polyhydroxybenzoate, polyhydroxynaphthalate, polylactic acid,
m) polycarbonates, polyester carbonates, and also blends, such as e.g. PC/ABS, PC/PBT, PC/PET/PBT, PC/PA,
n) cellulose derivatives, such as e.g. cellulose nitrate, cellulose acetate, cellulose propionate, cellulose butyrate,
o) non-thermoplastic or duroplastic plastic materials,
p) and mixtures, combinations or blends made of two or more of the previously mentioned polymers.

10. Use according to one of the preceding claims, **characterised in that** the organic oxyimides, relative to the plastic materials, are used at 0.01 to 30% by weight, preferably at 0.1 to 10% by weight, particularly preferably at 0.2 to 5% by weight.

11. Use according to one of the preceding claims, the generation of the radicals being used for modification of the plastic materials, for increasing the molecular weight of the plastic materials, for branching or crosslinking of the plastic materials, for molecular weight decrease of the plastic materials, for influencing a molecular weight distribution of the plastic materials, for grafting of unsaturated monomers onto the plastic materials.

12. Method for generating radicals in plastic materials, in which at least organic oxyimide, comprising at least one structural element of subsequently illustrated formula I, 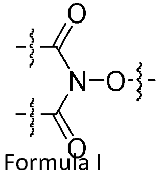
is mixed with a plastic material or a moulding compound comprising at least one plastic material and activated.
wherein the activation is especially effected thermally or by irradiation, wherein the activation is effected during a shaping process of the plastic material or of the moulding compound comprising at least one plastic material and the shaping process is injection moulding or extrusion.

13. Use of the method according to the preceding claimfor the modification of the plastic materials, for increasing the molecular weight of the plastic materials, for branching or crosslinking of the plastic materials, for molecular weight decrease of the plastic materials, for influencing a molecular weight distribution of the plastic materials or for grafting of unsaturated monomers onto the plastic materials.

14. Use according to the preceding claim, for decrease of the molecular weight of polypropylene or for crosslinking of polyethylene.

## Revendications

1. Utilisation d'oxyimides organiques, contenant au moins un élément de structure de formule I représentée ci-après 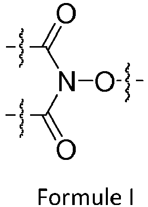 comme générateurs de radicaux dans des matières plastiques, dans laquelle les oxyimides organiques sont mélangés à une matière plastique ou une matière à mouler contenant au moins une matière plastique et activés, dans laquelle l'activation s'effectue thermiquement ou par irradiation et l'activation s'effectue pendant un procédé de moulage de la matière plastique ou de la matière à mouler contenant au moins une matière plastique et le procédé de moulage est le moulage par injection ou l'extrusion.

2. Utilisation selon la revendication 1, **caractérisée en ce que** l'oxyimide est choisi dans le groupe constitué par
a) des oxyimides, contenant au moins un élément de structure de formule II ci-après 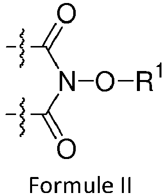 dans laquelle R¹ représente l'hydrogène ou un radical alkyle, cycloalkyle, aryle, hétéroaryle ou acyle éventuellement substitué, ainsi que
b) des oxyimides pontés, contenant au moins un élément de structure de formule III ci-après 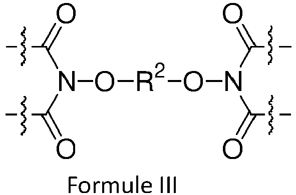 dans laquelle R² représente un radical alkylène, cycloalkylène, arylène, hétéroarylène ou acyle de pontage éventuellement substitué.

3. Utilisation selon la revendication précédente, **caractérisée en ce que** R² est choisi parmi des radicaux du groupe constitué par -(CH₂)ₙ- avec n = 1 à 18, -CH(CH₃)-, -C(CH₃)₂-, -O-, -S-, -SO₂-, - NHCO-, -CO- ainsi que les groupes représentés ci-après 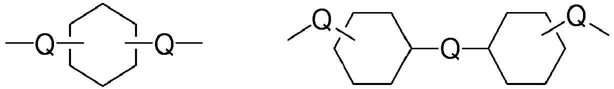 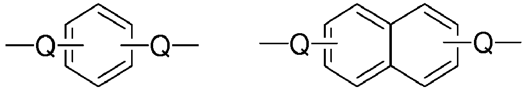 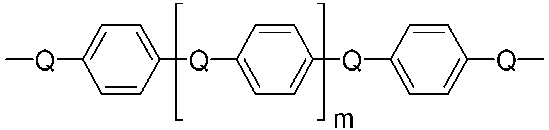 dans laquelle
les systèmes cycliques cycloaliphatiques ou aromatiques contenus dans les groupes représentés précédemment sont non substitués ou substitués par un ou plusieurs groupes alkyle et/ou alcoxy,
Q est identique ou différent à chaque occurrence et est choisi dans le groupe constitué par une liaison chimique ainsi que des radicaux -(CH₂)ₙ- avec n = 1 à 18, -CH(CH₃)-, -C(CH₃)₂-, -O-, -S-,-SO₂-, -NHCO-, -CO-, -OC(O)-O- et
m est 0 ou 1 à 18.

4. Utilisation selon l'une quelconque des revendications précédentes, **caractérisée en ce que** l'oxyimide organique présente une des formules ci-après 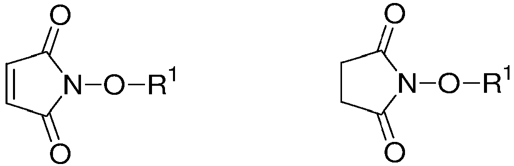 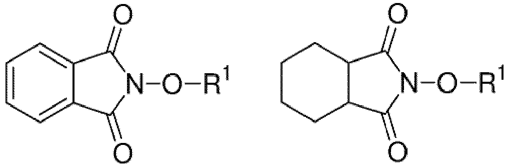 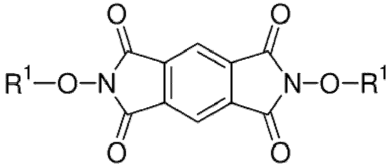 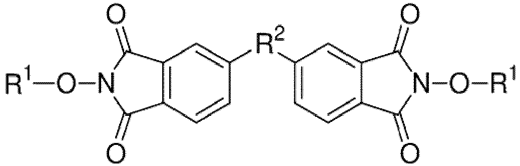 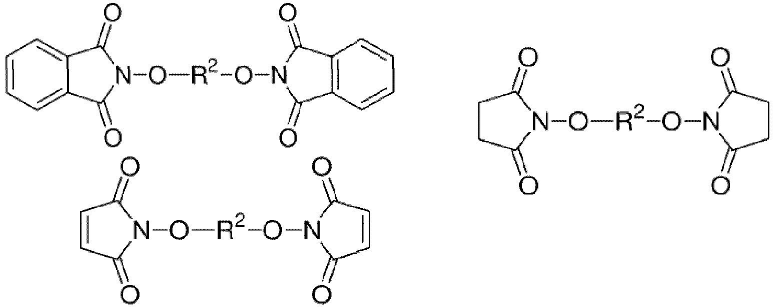 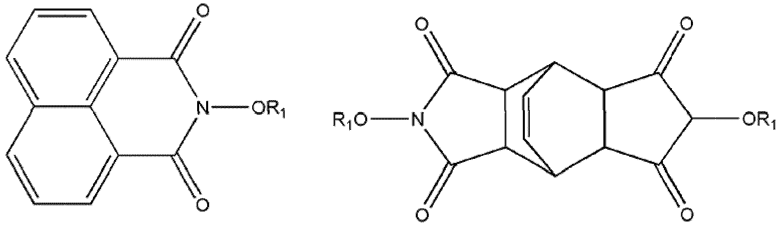 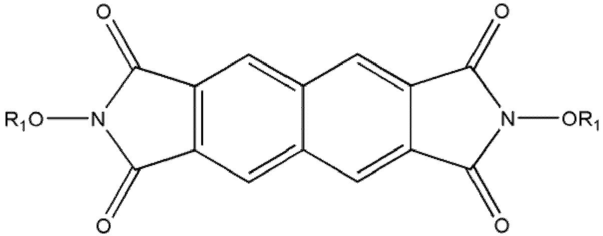 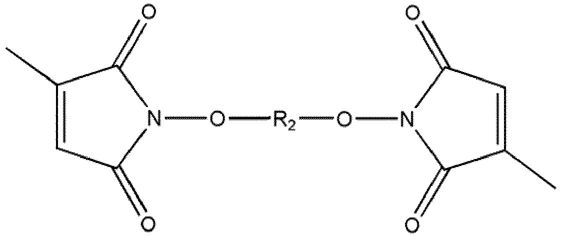 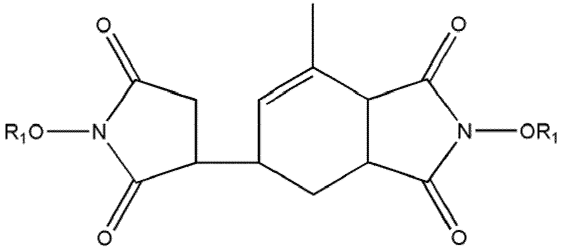 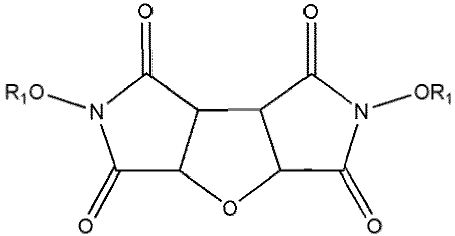 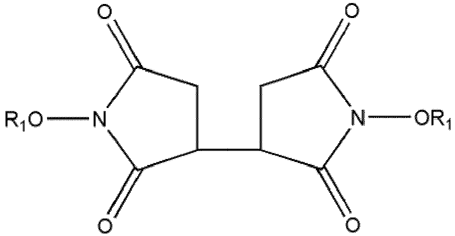 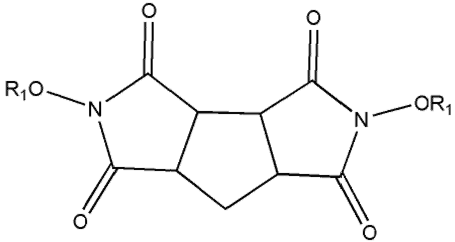 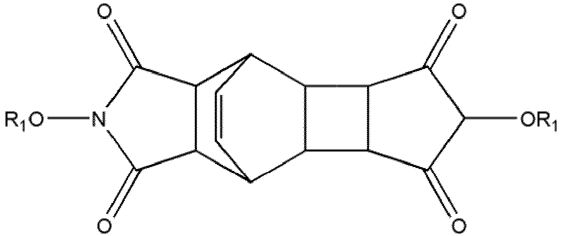 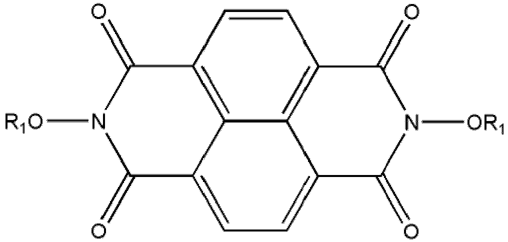 dans laquelle respectivement R¹ et R² présentent la signification indiquée ci-dessus.

5. Utilisation selon l'une quelconque des revendications 2 à 4, **caractérisée en ce que** R¹ = H, R¹ = alkyle ou R¹ = acyle.

6. Utilisation selon l'une quelconque des revendications précédentes, **caractérisée en ce que** les oxyimides organiques selon la formule I sont utilisés en combinaison avec au moins un agent de transfert de chaîne, en particulier au moins un agent de transfert de chaîne choisi dans le groupe constitué par les thiols, les disulfures, les esters phosphoriques, les phosphines, les halogénures organiques tels que les iodures, les bromures, les chlorures, les esters d'acide, les aldéhydes ou les amines tertiaires, en particulier des agents de transfert de chaîne avec un point d'ébullition supérieur à la température de transformation de la matière plastique.

7. Utilisation selon l'une quelconque des revendications précédentes, **caractérisée en ce que** les oxyimides organiques selon la formule I sont utilisés en combinaison avec
• au moins un composé polyfonctionnel choisi dans le groupe constitué par
a) les oligomères polyinsaturés et polymères à base de polybutadiène ou de poly-isoprène,
b) les composés di- et polyvinyliques comme par exemple le divinyl-benzène,
c) les composés di- et polyallyliques, comme par exemple le polyallyléther ou polyallylester, l'isocyanurate de trisallyle, le cyanurate de trisallyle, le bisphénol-A diallylique
d) les di- et polymaléimides,
e) les esters di- et poly(méth)acryliques de di- et polyalcools, et/ou
f) les silanes organofonctionnels,
• au moins un radical nitroxyle
et/ou
• au moins un composé catalytique, en particulier choisi dans le groupe constitué par les sels métalliques de métaux de transition comme par exemple le cuivre, le manganèse ou le fer, par exemple sous forme d'acétates comme l'acétate de Cu(I).

8. Utilisation selon l'une quelconque des revendications précédentes, caractérisé en ce quecaractérisé en ce que**caractérisée en ce que** les oxyimides organiques selon la formule I avec au moins un autre générateur de radicaux, de pcaractérisé en ce queréférence un générateur de radicaux choisi dans le groupe constitué par les N-alcoxyamines, les générateurs de radicaux -C-C, les formateurs de radicaux avec des groupes azoïques (-N=N-), les formateurs de radicaux avec des groupes hydrazine (-NH-HN-), les formateurs de radicaux avec des groupes hydrazone (>C=N-NH-), les formateurs de radicaux avec des groupes azine (>C=N-N=C<), les formateurs de radicaux avec des groupes triazène (-N=N-N<), les formateurs de radicaux avec des groupes disulfure ou polysulfure (-S-S-), les générateurs de radicaux avec des groupes thiol (-S-H), le sulfure de thiurame, les dithiocarbamates, le mercaptobenzthiazole et les sulfénamides, en particulier un générateur de radicaux sont choisis dans le groupe constitué par
a) les N-alcoxylamines selon la formule de structure représentée ci-après 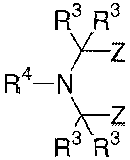 dans laquelle
R³ est l'hydrogène ou un radical alkyle, cycloalkyle, aryle, hétéroaryle ou acyle éventuellement substitué, en particulier un radical alkyle en C1 à C4,
R⁴ représente un radical alcoxy, aryloxy, cycloalcoxy, aralcoxy ou acyloxy,
Z représente l'hydrogène ou un radical alkyle, cycloalkyle, aryle, hétéroaryle ou acyle éventuellement substitué, dans laquelle les deux radicaux Z peuvent également former un cycle fermé, qui peut éventuellement être substitué par les groupes ester, éther, amine, amide, carboxy ou uréthane,
b) les composés azoïques selon les formules de structure représentées ci-après R⁵-N=N-R⁵ ou 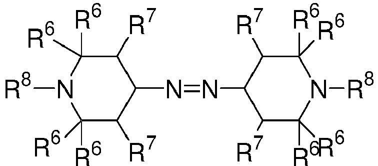 dans laquelle
R⁵ représente un radical alkyle, cycloalkyle ou aryle,
R⁶ est identique ou différent à chaque occurrence et représente un radical alkyle linéaire ou ramifié,
R⁷ est identique ou différent à chaque occurrence et représente l'hydrogène ou un radical alkyle linéaire ou ramifié, et
R⁸ est identique ou différent à chaque occurrence et représente un radical alkyle, alcoxy, aryloxy-cycloalkyloxy, aralcoxy ou acyloxy,
c) les dicumylènes selon la formule représentée ci-après 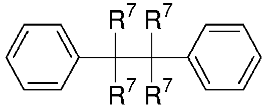 dans laquelle R⁷ présente la signification indiquée ci-dessus, de préférence est le méthyle,
d) et/ou les polycumylènes selon la formule de structure représentée ci-après 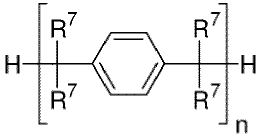 dans laquelle R⁷ présente la signification indiquée ci-dessus, de préférence est le méthyle, et 2 < n < 100.

9. Utilisation selon l'une quelconque des revendications précédentes, **caractérisée en ce que** les matières plastiques sont des polymères thermoplastiques, élastomères ou thermodurcissables, dans laquelle les matières plastiques sont de préférence des polymères thermoplastiques et sont en particulier choisies dans le groupe constitué par
a) les polymères d'oléfines ou de dioléfines comme par exemple le polyéthylène (LDPE, LLDPE, VLDPE, ULDPE, MDPE, HDPE, UHMWPE), le métallocène PE (m-PE), le polypropylène, le polyisobutylène, le poly-4-méthyl-pentène-1, le polybutadiène, le polyisoprène, le polycyclooctène, les copolymères polyalkylènemonoxyde de carbone, ainsi que les copolymères sous forme de structures statistiques ou séquentielles comme par exemple les polypropylène-polyéthylène (EP), EPM ou EPDM, éthylèneacétate de vinyle (EVA), éthylène-esters acryliques, comme par exemple l'éthylène-acrylate de butyle, l'éthylène-acide acrylique et leurs sels (ionomères), ainsi que les terpolymères comme par exemple l'éthylène-acide acrylique-acrylate de glycidyle, les polymères greffés comme par exemple le polypropylène-greffé à-anhydride maléique, le polypropylène-greffé à-acide acrylique, le polyéthylène-greffé à-acide acrylique, le polyéthylène-polybutylacrylate-greffé à-anhydride maléique,
b) le polystyrène, polyméthylstyrène, polyvinylnaphtalène, styrène-butadiène (SB), styrène-butadiène-styrène (SBS), styrène-éthylène-butylène-styrène (SEBS), styrène-éthylène-propylènestyrène, styrène-isoprène, styrène-isoprène-styrène (SIS), styrène-butadiène-acrylonitrile (ABS), styrène-acrylonitrile-acrylate (ASA), styrène-éthylène, polymères de styrène et d'anhydride maléique, y compris les copolymères greffés correspondants comme par exemple le styrène sur le butadiène, l'anhydride maléique sur le SBS ou le SEBS, ainsi que les copolymères greffés de méthacrylate de méthyle, de styrène-butadiène et d'ABS (MABS),
c) les polymères contenant des halogènes tels que le polychlorure de vinyle (PVC), le polychloroprène et le polychlorure de vinylidène (PVDC), les copolymères de chlorure de vinyle et de chlorure de vinylidène ou de chlorure de vinyle et d'acétate de vinyle, le polyéthylène chloré, le polyfluorure de vinylidène,
d) les polymères d'esters insaturés comme par exemple les polyacrylates et les polyméthacrylates tels que le polyméthacrylate de méthyle (PMMA), le polyacrylate de butyle, le polyacrylate de lauryle, le polyacrylate de stéaryle, le polyacrylonitrile, les polyacrylamides, les copolymères comme par exemple le polyacrylonitrile-polyacrylate d'alkyle,
e) les polymères d'alcools insaturés et de dérivés, comme par exemple l'alcool polyvinylique, l'acétate de polyvinyle, le polyvinylbutyral,
f) les polyacétals, comme par exemple le polyoxyméthylène POM) ou des copolymères avec par exemple du butanal,
g) les polyoxydes de phénylène et mélanges avec du polystyrène ou des polyamides,
h) les polymères d'éthers cycliques comme par exemple le polyéthylène glycol, le polypropylène glycol, l'oxyde de polyéthylène, l'oxyde de polypropylène, le polytétrahydrofurane,
i) les polyuréthanes, composés de polyéthers ou polyesters à terminaison hydroxy et d'isocyanates aromatiques ou aliphatiques, en particulier polyuréthanes linéaires, polyurées,
j) les polyamides comme par exemple le polyamide-6, 6.6, 6.10, 4.6, 4.10, 6.12, 12.12, le polyamide 11, le polyamide 12 ainsi que les polyamides (partiellement) aromatiques comme par exemple les polyphtalamides, par exemple préparés à partir d'acide téréphtalique et/ou d'acide isophtalique et de diamines aliphatiques ou à partir d'acides dicarboxyliques aliphatiques comme par exemple l'acide adipique ou l'acide sébacique et des diamines aromatiques comme par exemple le 1,4- ou 1,3-diaminobenzène, des mélanges de différents polyamides comme par exemple le PA-6 et PA 6.6 ou des mélanges de polyamides et de polyoléfines comme par exemple le PA/PP,
k) les polyimides, polyamide-imides, polyéther-imides, polyesterimides, poly(éther)-cétones, polysulfones, polyéthersulfones, polyarylsulfones, polyphénylène-sulfure, polybenzimidazoles, polyhydantoïnes,
l) les polyesters d'acides dicarboxyliques et de diols aliphatiques ou aromatiques ou d'acides hydroxy-carboxyliques comme par exemple le polyéthylène téréphtalate (PET), le polybutylène téréphtalate (PBT), le polypropylène téréphtalate, le polyéthylène naphtylate, le poly-1,4-diméthylolcyclohexane téréphtalate, le polyhydroxybenzoate, le polyhydroxynaphtalate, l'acide polylactique,
m) les polycarbonates, polyestercarbonates, ainsi que les mélanges comme par exemple les PC/ABS, PC/PBT, PC/PET/PBT, PC/PA
n) les dérivés de cellulose comme par exemple le nitrate de cellulose, l'acétate de cellulose, le propionate de cellulose, le butyrate de cellulose
o) les matières plastiques thermodurcissables,
p) ainsi que les mélanges, combinaisons ou mélanges de deux polymères susmentionnés ou plus.

10. Utilisation selon l'une quelconque des revendications précédentes, **caractérisée en ce que** les oxyimides organiques sont utilisés, par rapport aux matières plastiques, à raison de 0,01 à 30 % en poids, de préférence à raison de 0,1 à 10 % en poids, de manière particulièrement préférée à raison de 0,2 à 5 % en poids.

11. Utilisation selon l'une quelconque des revendications précédentes, dans laquelle la génération des radicaux est utilisée pour modifier les matières plastiques, pour augmenter le poids moléculaire des matières plastiques, pour ramifier ou réticuler les matières plastiques, pour dégrader le poids moléculaire des matières plastiques, pour influencer une répartition du poids moléculaire des matières plastiques, pour greffer des monomères insaturés sur les matières plastiques.

12. Procédé pour générer des radicaux dans des matières plastiques, selon lequel au moins un oxyimide organique, contenant au moins un élément de structure de formule I représentée ci-après 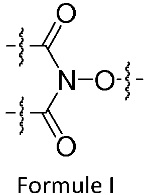 est mélangé à une matière plastique ou à une matière à mouler contenant au moins une matière plastique et activé, dans lequel l'activation s'effectue en particulier thermiquement ou par irradiation, dans lequel l'activation s'effectue pendant un procédé de moulage de la matière plastique ou de la matière à mouler contenant au moins une matière plastique et le procédé de moulage est le moulage par injection ou l'extrusion.

13. Utilisation du procédé selon la revendication précédente pour modifier les matières plastiques, pour augmenter le poids moléculaire des matières plastiques, pour ramifier ou réticuler les matières plastiques, pour réduire le poids moléculaire des matières plastiques, pour influencer une répartition du poids moléculaire des matières plastiques ou pour greffer des monomères insaturés sur les matières plastiques.

14. Utilisation selon la revendication précédente pour réduire le poids moléculaire du polypropylène ou pour réticuler le polyéthylène.
